# EUROPÄISCHE PATENTANMELDUNG

(11) **EP 4 332 919 A1**
(43) Veröffentlichungstag der Anmeldung: **06.03.2024**
(21) Anmeldenummer: 23188890.0
(22) Anmeldetag: 01.08.2023
(51) Int. Cl.: G07B 15/02

(54) **ENTWERTERVORRICHTUNG FÜR EIN PERSONENTRANSPORTSYSTEM**

(30) Priorität: 15.08.2022 DE 102022120499
(71) Anmelder: Scheidt & Bachmann GmbH, 41238 Mönchengladbach (DE)
(72) Erfinder: Oelert, Dipl. Ing. Kai, 69190 Walldorf (DE)
(74) Vertreter: Cohausz & Florack

(57) **Zusammenfassung**

Die Anmeldung betrifft eine Entwertervorrichtung (100, 200, 300) für ein Personentransportsystem (340), umfassend mindestens ein Lesemodul (102, 202), eingerichtet zum Erfassen einer elektronischen Mediumkennung eines Open Payment Ticketmediums (116, 316), mindestens einen Datenspeicher (110, 210), eingerichtet zum Speichern eines Sperrdatensatzes, wobei der Sperrdatensatz mindestens eine gesperrte elektronische Mediumkennung und mindestens ein der gesperrten elektronischen Mediumkennung zugeordnetes Sperrattribut enthält, mindestens eine Prüfanordnung (104, 204) mit mindestens einem Vergleichsmodul (106, 206) und mindestens einem Prüfmodul (108, 208), wobei das Vergleichsmodul (106, 206) eingerichtet ist zum Identifizieren einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung, wobei das Prüfmodul (108, 208) eingerichtet ist, bei einer Identifizierung einer gesperrten elektronischen Mediumkennung, zum Prüfen, ob das mindestens eine der identifizierten gesperrten elektronischen Mediumkennung zugeordnete Sperrattribut mindestens ein vorgegebenes Sperrkriterium erfüllt, und mindestens ein Ausgabemodul (112, 212), eingerichtet zum Zulassen eines Nutzens des Personentransportsystems (340), wenn das Prüfmodul (108, 208) feststellt, dass das mindestens eine Sperrattribut das mindestens eine vorgegebene Sperrkriterium erfüllt.

## Beschreibung

Die Anmeldung betrifft eine Entwertervorrichtung für ein Personentransportsystem, umfassend mindestens ein Lesemodul, eingerichtet zum Erfassen einer elektronischen Mediumkennung eines Open Payment Ticketmediums. Darüber hinaus betrifft die Anmeldung ein Personentransportsystem und ein Verfahren, das insbesondere durch eine Entwertervorrichtung ausführbar ist.

Ein Personentransportsystem, insbesondere ein öffentliches Personentransportsystem, dient dem Transport von Personen bzw. Nutzern mittels Personentransportfahrzeugen (nachfolgend als Transportfahrzeuge bezeichnet). Beispielhafte und nicht abschließende Transportfahrzeuge sind Schienenfahrzeuge (z.B. Bahn, U-Bahn, Straßenbahn etc.), Kraftfahrzeuge (z.B. Bus), aber auch Wasserfahrzeuge und Flugzeuge. Eine Fahrt eines Nutzers mit einem Transportfahrzeug von einem Fahrtstartpunkt zu einem Fahrtendpunkt wird vorliegend insbesondere mit einer Transportfahrt bezeichnet.

Für eine berechtigte bzw. zulässige Inanspruchnahme einer Transportfahrt bzw. einer entsprechenden Transportdienstleitung ist in der Regel ein Ticketmedium erforderlich. Das Ticketmedium kann allgemein anzeigen, dass der Nutzer zur Durchführung der Transportfahrt bzw. zum Nutzen des Personentransportsystems berechtigt ist. Bei Personentransportsystemen des Stands der Technik können als Ticketmedien beispielweise Papiertickets eingesetzt werden, die vor dem Fahrtantritt an einem Fahrkartenautomaten oder dergleichen zu erwerben sind.

Bekannt ist auch, dass in Ticketmedien technisch auslesebare Daten gespeichert sind, die Angaben über die Gültigkeit des jeweiligen Ticketmediums für die Durchführung einer Transportfahrt umfassen. Grundsätzlich sind aus dem Stand der Technik auch Personentransportsysteme bekannt, die proprietäre Ticketmedien (auch als Closed Loop Ticketsysteme bzw. Closed Payment-Ticketsysteme bezeichnet) und/oder offene bzw. Open Payment Ticketmedien (entsprechende Ticketsysteme werden auch als Open Loop Ticketsysteme bzw. Open Payment Ticketsysteme bezeichnet) verwenden. Auch hybride Personentransportsysteme, bei denen beide Arten von Ticketmedien verwendet werden können, sind bekannt.

Der Vorteil von Personentransportsystemen mit einer offenen Architektur bzw. Open Payment Ticketmedien gegenüber Personentransportsystemen mit einer geschlossenen Architektur bzw. (ausschließlich) proprietären Ticketmedien liegt insbesondere darin, dass diese im Vergleich flexibler sind.

Nutzer bzw. Fahrgäste können bei der Nutzung eines Transportfahrzeugs für eine Transportfahrt unterschiedliche Open Payment Ticketmedien insbesondere als Nutzeridentifikationselemente nutzen, wie Tokens, Chipkarten (bzw. Smartcards), Kreditkarten, Bankkarten (oder dergleichen), Mobiltelefone, Personal Digital Assistants (PDAs), Tablet-PCs, integrierte Schaltungschips, elektronische Pässe, elektronische Ausweisdokumente etc. Insbesondere kann eine in dem Open Payment Ticketmedium gespeicherte und (nur technisch) auslesbare elektronische Mediumkennung für eine Authentifikation des Nutzers und beispielsweise einer anschließenden Abrechnung der durchgeführten Transportfahrt genutzt werden.

Es versteht sich, dass der Betreiber eines Personentransportsystems vorgeben kann, welche Ticketmedien tatsächlich verwendet werden dürfen und welche ausgeschlossen sind.

Ein Personentransportsystem mit einer offenen Architektur bzw. mit Open Payment Ticketmedien umfasst in der Regel eine Mehrzahl von Entwertervorrichtungen. Eine Entwertervorrichtung (auch als Validatorvorrichtung oder kurz Validator bezeichnet) kann insbesondere in einem Haltestellenbereich (z.B. Haltestelle, Bahnhof etc.) und/oder in einem Transportfahrzeug des Personentransportsystems angeordnet sein.

Eine Entwertervorrichtung ist vorliegend insbesondere eingerichtet zum Entwerten eines Open Payment Ticketmediums durch ein Erfassen der in einem Speichermittel des Open Payment Ticketmediums gespeicherten elektronischen Mediumkennung. Eine elektronische Mediumkennung meint vorliegend insbesondere eine eineindeutige elektronisch codierte Mediumkennung.

Für eine ordnungsgemäße bzw. berechtigte Nutzung eines Transportfahrzeugs kann sich ein Nutzer beispielsweise bei einem Betreten des Transportfahrzeugs oder eines Haltestellenbereichs mittels des mobilen bzw. tragbaren Open Payment Ticketmediums bei einer in dem Transportfahrzeug und/oder dem Haltestellenbereich angeordneten Entwertervorrichtung anmelden (ein Anmelden kann auch als Check-in bezeichnet werden). Bei einem Verlassen des Transportfahrzeugs kann ein Nutzer sich in entsprechender Weise bei einer Entwertervorrichtung abmelden (ein Abmelden kann auch als Check-out" bezeichnet werden).

Für ein Entwerten des Open Payment Ticketmediums kann eine vorliegende Entwertervorrichtung über mindestens ein Lesemodul verfügen, insbesondere in Form einer Nahbereichsschnittstelle, die eingerichtet ist, die in dem Open Payment Ticketmedium gespeicherte elektronische Mediumkennung auszulesen bzw. zu erfassen. Die erfasste elektronische Mediumkennung kann zum Identifizieren des Nutzers und insbesondere zum Abrechnen der Nutzung des Transportfahrzeugs für die zurückgelegte Strecke zwischen Ein- und Ausstieg bzw. Fahrtstartpunkt und Fahrtendpunkt herangezogen werden. Ein Identifizieren des Nutzers mit personenbezogenen Nutzerdaten (Name, Anschrift, Kontaktdetails) ist dabei möglich, falls sich der Nutzer entsprechend registriert hat, aber nicht zwingend erforderlich.

Für jede erfasste elektronische Mediumkennung kann durch die Entwertervorrichtung ein Entwertungsdatensatz, beispielsweise als Check-In-Datensatz oder als Check-Out Datensatz, generiert bzw. angelegt werden. Ein Entwertungsdatensatz kann zumindest die erfasste elektronische Mediumkennung und beispielsweise den Erfassungszeitpunkt der elektronischen Mediumkennung enthalten. Ein entsprechender Datensatz kann zumindest teilweise kryptografisch verschlüsselt sein. In bevorzugter Weise kann ein entsprechender Datensatz gemäß den Sicherheitsrichtlinien der Finanzwirtschaft zumindest teilweise verschlüsselt sein. Der Entwertungsdatensatz kann Kartendaten von Kreditkarten oder Bankkarten enthalten. In bevorzugter Weise kann ein Entwertungsdatensatz zumindest teilweise gehasht sein.

Aus Sicherheitsgründen ist beim Stand der Technik in jeder Entwertervorrichtung ein Sperrdatensatz gespeichert. Hierzu kann eine Entwertervorrichtung einen Datenspeicher aufweisen. Ein Sperrdatensatz des Stands der Technik enthält gesperrte elektronische Mediumkennungen, also elektronische Mediumkennungen, die nicht zu einer Nutzung eines Transportfahrtzeugs berechtigen.

Um eine unberechtigte elektronische Mediumkennung zu detektieren, weist eine Entwertervorrichtung des Stands der Technik ein Vergleichsmodul auf. Das Vergleichsmodul ist dazu eingerichtet, eine detektierte elektronische Mediumkennung in zu vergleichen mit Kennungen der Herausgeber, die im Personentransportsystem überhaupt als elektronische Medien zugelassen sind. Aus dem Bereich der kontaktlosen Kreditkarten können zum Beispiel Karten der Herausgeber American Express, VISA, MasterCard und VISA zugelassen sein, während beispielweise Karten des Herausgebers Diners Club nicht zugelassen sein können; Herausgeber von Zahlungsmedien, die potenziell zur Nutzung eines Transportfahrtzeugs berechtigen können, sind beispielweise Zahlungsdienstleister wie ApplePay, GooglePay, PayPal etc. Eine detektierte elektronische Mediumkennung, die nicht von einem zugelassenen Herausgeber stammt, berechtigt dabei nicht zu einer Nutzung eines Transportfahrtzeugs; dieser Vergleich erfolgt also auf Basis von Medientypen (nicht von Medien-Individuen). Das Vergleichsmodul ist weiter insbesondere eingerichtet zum Identifizieren einer gesperrten elektronischen Mediumkennung aus der mindestens einen in dem Sperrdatensatz enthaltenen gesperrten elektronischen Mediumkennung durch weiteres Vergleichen der erfassten elektronischen Mediumkennung mit der mindestens einen gesperrten elektronischen Mediumkennung. Die im weiteren Vergleich identifizierte gesperrte elektronische Mediumkennung identifiziert also ein einzelnes Medien-Individuum und kann dabei von einem zugelassenen Herausgeber stammen.

Ferner weisen bekannte Entwertervorrichtungen ein Ausgabemodul auf, das eingerichtet ist zum Verweigern eines Nutzens des Personentransportsystems, wenn das Vergleichsmodul feststellt, dass die erfasste elektronischen Mediumkennung zu einer gesperrten elektronischen Mediumkennung korrespondiert, also insbesondere identisch ist. Mit anderen Worten, der Zugang zu einem Transportfahrzeug wird bei einer Detektion einer gesperrten elektronischen Mediumkennung stets verweigert bzw. gesperrt.

Nachteilig an dem Stand der Technik ist jedoch, dass der Sperrdatensatz eine elektronische Mediumkennung enthalten kann, die demnach als gesperrt gilt, die jedoch tatsächlich zur Nutzung eines Transportfahrzeugs bzw. des Personentransportsystems berechtigt. Grund für diese fehlerhafte Bewertung ist beispielsweise, dass der Aufnahmegrund für die Aufnahme in den Sperrdatensatz zwischenzeitlich entfallen ist oder die Aufnahme in den Sperrdatensatz bereits fehlerhaft war. Da die entsprechende elektronische Mediumkennung in diesen Fällen jedoch als gesperrt gilt, wird dem entsprechenden Nutzer die Nutzung des Transportfahrzeugs bzw. die Inanspruchnahmen einer entsprechenden Transportdienstleistung stets verweigert, obwohl der Nutzer tatsächlich berechtigt ist, mit dem entsprechenden Open Payment Ticketmedium das Transportfahrzeug zu nutzen.

Somit sind beim Stand der Technik die Nutzbarkeit und die Zuverlässigkeit des Personentransportsystems reduziert.

Daher liegt der Anmeldung die Aufgabe zugrunde, eine Entwertervorrichtung für ein Personentransportsystem bereitzustellen, welche die Nutzbarkeit und die Zuverlässigkeit des Personentransportsystems erhöht und gleichzeitig eine ausreichende Sicherheit gewährleistet.

Die Aufgabe wird gemäß einem ersten Aspekt der Anmeldung gelöst durch eine Entwertervorrichtung für ein Personentransportsystem nach Anspruch 1. Die Entwertervorrichtung umfasst mindestens ein Lesemodul. Das Lesemodul ist eingerichtet zum Erfassen einer elektronischen Mediumkennung eines Open Payment Ticketmediums. Die Entwertervorrichtung umfasst mindestens einen Datenspeicher. Der Datenspeicher ist eingerichtet zum Speichern eines Sperrdatensatzes. Der Sperrdatensatz enthält mindestens eine gesperrte elektronische Mediumkennung und mindestens ein der gesperrten elektronischen Mediumkennung zugeordnetes Sperrattribut. Die Entwertervorrichtung umfasst mindestens eine Prüfanordnung mit mindestens einem Vergleichsmodul und mindestens einem Prüfmodul. Das Vergleichsmodul ist eingerichtet zum Identifizieren einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung. Das Prüfmodul ist eingerichtet, bei einer Identifizierung einer gesperrten elektronischen Mediumkennung, zum Prüfen, ob das mindestens eine der identifizierten gesperrten elektronischen Mediumkennung zugeordnete Sperrattribut mindestens ein vorgegebenes Sperrkriterium erfüllt. Die Entwertervorrichtung umfasst mindestens ein Ausgabemodul. Das Ausgabemodul ist eingerichtet zum Zulassen eines Nutzens des Personentransportsystems, wenn das Prüfmodul feststellt, dass das mindestens eine Sperrattribut das mindestens eine vorgegebene Sperrkriterium erfüllt.

Indem im Gegensatz zum Stand der Technik anmeldungsgemäß jeder gesperrten elektronischen Mediumkennung mindestens ein Sperrattribut zugeordnet ist und die Entscheidung durch die Entwertervorrichtung, ob ein Nutzen des Personentransportsystems zugelassen wird oder nicht, zusätzlich von der Auswertung des mindestens einen Sperrattributs und mindestens eines Sperrkriteriums abhängt, werden die Nutzbarkeit und die Zuverlässigkeit des Personentransportsystems erhöht und gleichzeitig eine ausreichende Sicherheit gewährleistet. So kann durch das Sperrattribut ein Nutzen des Personentransportsystems ermöglicht werden, auch wenn die zugehörige elektronische Mediumkennung als gesperrte elektronische Mediumkennung in dem Sperrdatensatz enthalten ist.

Die anmeldungsgemäße Entwertervorrichtung dient der Verwendung in einem Personentransportsystem. Ein anmeldungsgemäßes Personentransportsystem ist insbesondere ein öffentliches Personentransportsystem und dient dem Transport von Personen bzw. Nutzern mittels Personentransportfahrzeugen (nachfolgend als Transportfahrzeuge bezeichnet). Beispielhafte und nicht abschließende Transportfahrzeuge sind Schienenfahrzeuge (z.B. Bahn, U-Bahn, Straßenbahn etc.), Kraftfahrzeuge (z.B. Bus), aber auch Wasserfahrzeuge und Flugzeuge.

Ein anmeldungsgemäßes Personentransportsystem kann ein Check-in / Check-out System (CICO) und/oder ein Check-in / Be-out (CIBO) System sein.

Eine anmeldungsgemäße Entwertervorrichtung eines Personentransportsystems ist eingerichtet zum Entwerten eines Ticketmediums durch Erfassen einer in einem Speichermittel des Open Payment Ticketmediums gespeicherten elektronischen Mediumkennung. Insbesondere ist es in dem anmeldungsgemäßen Personentransportsystems für eine berechtigte Nutzung eines Transportfahrzeugs erforderlich, dass ein Open Payment Ticketmedium vor einer entsprechenden Nutzung entwertet wird, also die elektronische Mediumkennung durch die Entwertervorrichtung erfasst wird.

Vorzugsweise kann die mindestens eine Entwertervorrichtung in einem Haltestellenbereich und/oder einem Transportfahrzeug angeordnet sein, um ein Entwerten des Ticketmediums bei einem Betreten des Haltestellenbereichs bzw. des Transportfahrzeugs (also des zahlungspflichtigen Raums) zu ermöglichen.

Ein Erfassen einer elektronischen Mediumkennung durch eine Entwertervorrichtung bzw. ein Durchführen eines sogenannten Taps an einer Entwertervorrichtung bei einem Betreten eines Transportfahrzeugs oder eines Haltestellenbereichs bewirkt insbesondere ein Einchecken eines Nutzers. In entsprechender Weise kann ein Erfassen einer elektronischen Mediumkennung durch eine Entwertervorrichtung bzw. ein Durchführen eines Taps an einer Entwertervorrichtung bei einem Verlassen eines Transportfahrzeugs oder eines Haltestellenbereichs ein Auschecken eines Nutzers bewirken.

Zum Erfassen bzw. Einlesen der elektronischen Mediumkennung weist die anmeldungsgemäße Entwertervorrichtung mindestens ein Lesemodul auf. Das Lesemodul kann eine kontaktlose oder kontaktbehaftete Schnittstelle umfassen. Die (kontaktlose oder kontaktbehaftete) Schnittstelle korrespondiert hierbei zu der (kontaktlosen oder kontaktbehafteten) Schnittstelle des auszulesenden Open Payment Ticketmediums. Nicht abschließende Beispiele für kontaktbehaftete Ticketmediumschnittstellen sind Magnetstreifen und Europay-Mastercard-VISA-Chips (EMV-Chips); Beispiele für bevorzugte kontaktlose Ticketmediumschnittstellen sind Nearfield Communication-Schnittstellen (NFC-Schnittstellen) gemäß ISO 14443 oder eine Bluetooth-Schnittstelle. Bevorzugt kann das Lesemodul der Entwertervorrichtung ein NFC-Lesemodul sein oder ein Bluetooth-Schnittstellenmodul sein.

Ein anmeldungsgemäßes Open Payment Ticketmedium ist vorliegend insbesondere nicht mit einer bestimmten Transportnutzungsbedingung bzw. einem bestimmten Fahrausweisprodukt kodiert. Die elektronische Mediumkennung ist insbesondere eine elektronisch codierte Mediumkennung, ausgewählt aus der Gruppe, umfassend:
- elektronische PAN (Primary Account Number), falls das Open Payment Ticketmedium eine (Open Payment-)Bankkarte oder (Open Payment-)Kreditkarte ist (in diesem Fall kann das Speichermittel insbesondere ein NFC-Speichermittel sein),
- eine UUID (Universally Unique Identifier), falls das Ticketmedium über eine Bluetooth-Schnittstelle ausgelesen wird,
- eine IMEI (International Mobile Equipment Identity), MAC (Media-Access-Control)-Adresse oder andere geeignete Kennungen, insbesondere falls das Ticketmedium ein elektronisches Endgerät ist.

Insbesondere ist die elektronische Mediumkennung eine systemweit eineindeutige elektronische Mediumkennung. Eine elektronische Mediumkennung ist insbesondere stets elektronisch (kontaktlos oder kontaktgebunden) auslesbar.

Bevorzugt meint eine elektronische Mediumkennung, insbesondere in Form einer elektronisch codierten PAN (EPAN), dass diese in ihrer Gesamtheit nur in einem Speichermittel des Open Payment Ticketmediums gespeichert ist und insbesondere nicht optisch (oder einem anderen zweiten Speichermittel des Ticketmedium) durch einen Nutzer (vollständig) ablesbar ist.

Das Open Payment Ticketmedium kann vorzugsweise ein kreditkartenbasiertes und/oder debitkartenbasiertes Ticketmedium sein. Bevorzugt kann das Open Payment Ticketmedium eine Kreditkarte und/oder eine Debitkarte sein. Auch kann das kartenbasierte Open Payment Ticketmedium ein mobiles Endgerät sein, auf dem eine Kreditkarte und/oder Debitkarte elektronisch abgebildet ist bzw. mit dem eine Kreditkarte und/oder Debitkarte elektronisch (eineindeutig) verknüpft ist. Nicht abschließende Beispiele eines solchen Konzepts sind Apple Pay, Google Pay oder PayPal.

Die Entwertervorrichtung umfasst mindestens einen Datenspeicher. In dem Datenspeicher ist zumindest ein Sperrdatensatz gespeichert. Es versteht sich, dass weitere Daten (z.B. das mindestens eine vorgegebene Sperrkriterium, generierte Entwertungsdatensätze etc.) in dem Datenspeicher gespeichert sein können.

Der Sperrdatensatz enthält mindestens eine gesperrte elektronische Mediumkennung und mindestens ein der mindestens einen gesperrten elektronischen Mediumkennung zugeordnetes Sperrattribut. Eine gesperrte elektronische Mediumkennung des Sperrdatensatzes ist insbesondere in Form eines Hashwerts der gesperrten elektronischen Mediumkennung in dem Sperrdatensatz gespeichert.

Insbesondere kann ein Sperrdatensatz eine Mehrzahl von gesperrten elektronischen Mediumkennungen enthalten. Vorzugsweise kann jeder gesperrten elektronischen Mediumkennung jeweils mindestens ein Sperrattribut zugeordnet sein.

Vorzugsweise kann der Sperrdatensatz in Form einer Zuordnungstabelle gebildet sein. Die Tabelle 1 zeigt eine beispielhafte Zuordnungstabelle mit n Mediumkennungen und m Attributwerte eines Sperrattributs, das jeder Mediumkennung zugeordnet ist. Die Attributwerte können sich voneinander unterscheiden oder identisch sein.

**Tabelle 1**

| Gesperrte elektronische Mediumkennung | Sperrattribut |
|---|---|
| Mediumkennung₁ | Attributwert₁ |
| Mediumkennung₂ | Attributwert₂ |
| ... | ... |
| Mediumkennungₙ | Attributwertₘ |

Weiter umfasst die Entwertervorrichtung eine Prüfanordnung. Eine anmeldungsgemäße Prüfanordnung umfasst mindestens ein Vergleichsmodul und mindestens ein Prüfmodul. Das Vergleichsmodul vergleicht eine erfasste elektronische Mediumkennung mit der mindestens einen in dem Sperrdatensatz als gesperrte elektronische Mediumkennung gespeicherten Mediumkennung. Wenn keine Korrespondenz (insbesondere Identität) zwischen einer erfassten elektronischen Mediumkennung und einer gesperrten elektronischen Mediumkennung durch das Vergleichsmodul festgestellt wird, kann das Ausgabemodul eingerichtet sein zum Freigeben des Nutzens des Personentransportsystems, also insbesondere des mindestens einen Transportfahrzeugs. Wie noch beschrieben wird, kann zudem ein Entwertungsdatensatz erstellt werden.

Wenn eine Korrespondenz (insbesondere Identität) zwischen einer erfassten elektronischen Mediumkennung und einer gesperrten elektronischen Mediumkennung durch das Vergleichsmodul festgestellt wird, erfolgt anmeldungsgemäß eine zusätzliche Prüfung insbesondere der Berechtigung zur Nutzung des Personentransportsystems, basierend auf dem mindestens einen Sperrattribut (bzw. dessen Sperrattributwert) und mindestens einem vorgegebenen Sperrkriterium.

Das Sperrkriterium gibt insbesondere an, wann ein Nutzen des Personentransportsystems zugelassen ist, obwohl die zugehörige elektronische Mediumkennung in dem Sperrdatensatz enthalten ist. Das Prüfmodul ist insbesondere eingerichtet zum Prüfen, ob das Sperrattribut (bzw. dessen Sperrattributwert) das Sperrkriterium erfüllt oder nicht erfüllt. Wenn das Prüfmodul feststellt, dass das mindestens eine Sperrattribut das mindestens eine vorgegebene Sperrkriterium erfüllt, ist das Ausgabemodul eingerichtet zum Freigeben bzw. Zulassen des Nutzens des Personentransportsystems, also insbesondere des mindestens einen Transportfahrzeugs.

Das Ausgabemodul ist insbesondere ferner eingerichtet zum Verweigern eines Nutzens des Personentransportsystems, also insbesondere des mindestens einen Transportfahrzeugs, wenn das Prüfmodul feststellt, dass das mindestens eine Sperrattribut das mindestens eine vorgegebene Sperrkriterium nicht erfüllt.

Gemäß einer Ausführungsform der anmeldungsgemäßen Entwertervorrichtung kann die Entwertervorrichtung ferner mindestens ein Kommunikationsmodul umfassen. Das Kommunikationsmodul kann eingerichtet sein zum Empfangen eines aktualisierten Sperrdatensatzes. Die Entwertervorrichtung kann mindestens ein Speichermodul umfassen. Das Speichermodul kann eingerichtet sein zum Speichern des aktualisierten Sperrdatensatzes in dem Datenspeicher bzw. zum Aktualisieren des in dem Datenspeicher bereits gespeicherten Sperrdatensatzes.

Das Kommunikationsmodul der Entwertervorrichtung kann insbesondere ein Fernkommunikationsmodul sein. Das Kommunikationsmodul kann mit mindestens einem (drahtlosen und/oder drahtgebundenen) Kommunikationsnetz (z.B. ein Mobilfunknetz) verbunden sein. Über das mindestens eine Kommunikationsnetz kann ein aktualisierter Sperrdatensatz bereitgestellt werden, beispielsweise durch ein Hintergrundsystem des Personentransportsystems. Das Empfangen eines aktualisierten Sperrdatensatzes kann in regelmäßigen Abständen, zu vorgegebenen Zeitpunkten und/oder bei einer Änderung in dem Sperrdatensatz erfolgen. Eine Änderung des Sperrdatensatz ist beispielsweise ein Hinzufügen oder Löschen einer gesperrten elektronischen Mediumkennung und/oder ein Ändern eines Sperrattributs (bzw. dessen Sperrattributwerts).

Bei (jedem) Empfang eines aktualisierten Sperrdatensatzes kann durch das Speichermodul der (lokal) in dem Datenspeicher gespeicherte Sperrdatensatz aktualisiert werden. Vorteilhafterweise befindet sich (daher) in dem Datenspeicher stets der augenblicklich gültige Sperrdatensatz.

Gemäß einer weiteren Ausführungsform der anmeldungsgemäßen Entwertervorrichtung kann die Entwertervorrichtung mindestens ein (zuvor beschriebenes) Kommunikationsmodul umfassen. Das Kommunikationsmodul kann (zusätzlich) eingerichtet sein zum Versenden mindestens eines Entwertungsdatensatzes an ein Hintergrundsystem des Personentransportsystems.

Der Entwertungsdatensatz kann zumindest die erfasste elektronische Mediumkennung und vorzugsweise mindestens ein Entwertungsdatum enthalten, ausgewählt aus der Gruppe, umfassend:
- Erfassungszeitpunkt der elektronischen Mediumkennung,
- Kennung der Entwertervorrichtung,
- Position der Entwertervorrichtung während des Erfassungszeitpunkts der elektronischen Mediumkennung, und
- Datum, ob ein Nutzen des Personentransportsystems zugelassen oder verweigert wurde.

Insbesondere kann die Entwertervorrichtung mindestens ein Erzeugungsmodul umfassen, eingerichtet zum Erzeugen eines Entwertungsdatensatzes bei einer Erfassung, durch das Lesemodul, einer elektronischen Mediumkennung.

Der Entwertungsdatensatz enthält zumindest die elektronische Mediumkennung. Vorzugsweise enthält der Entwertungsdatensatz den Erfassungszeitpunkt (insbesondere ein Zeitstempel) der elektronischen Mediumkennung. Bevorzugt kann der Entwertungsdatensatz zusätzlich eine Kennung der Entwertervorrichtung enthalten. Durch die Kennung kann insbesondere der Standort der Entwertervorrichtung bestimmbar sein. Hierdurch kann insbesondere der Fahrtstartpunkt oder Fahrtendpunkt (oder ein Zwischenhalt) bestimmt werden.

Insbesondere kann der Entwertungsdatensatz alternativ oder zusätzlich eine Position bzw. ein Positionsdatum der Entwertervorrichtung während des Erfassungszeitpunkts der elektronischen Mediumkennung enthalten. Das Positionsdatum (z.B. GPS-Koordinaten, Haltestelle oder dergleichen) kann zumindest ein Bestimmen der Position der Entwertervorrichtung zum Zeitpunkt des Erfassens der elektronischen Mediumkennung durch die Entwertervorrichtung ermöglichen. Hierdurch ist es insbesondere möglich, den Fahrtstartpunkt oder Fahrtendpunkt (oder ein Zwischenhalt) bei einer Entwertervorrichtung zu bestimmen, die sich innerhalb eines Transportfahrzeugs befindet. Optional, insbesondere dann, wenn die Entwertervorrichtung in einem Transportfahrzeug betrieben wird, kann der Entwertungsdatensatz auch eine Transportfahrzeugkennung und/oder eine Fahrroutenkennung enthalten.

Gemäß einer bevorzugten Ausführungsform der anmeldungsgemäßen Entwertervorrichtung kann das mindestens eine Sperrattribut eine Angabe sein, ob mindestens eine weitere Transportfahrt mit dem zugehörigen Open Payment Ticketmedium (bzw. der entsprechenden gesperrten elektronischen Mediumkennung) erlaubt ist oder nicht. In einem einfachen Fall kann diese Angabe lediglich angeben, dass mindestens eine weitere Fahrt erlaubt ist oder nicht. In diesem Fall kann das Sperrkriterium lediglich angeben, dass, wenn die Angabe angibt, dass mindestens eine weitere Fahrt erlaubt ist, ein Nutzen des Transportsystems zugelassen ist. Oder wenn die Angabe angibt, dass keine weitere Fahrt erlaubt ist, ein Nutzen des Transportsystems verweigert wird. Das Ausgabemodul kann eingerichtet sein zum Zulassen eines Nutzens des Personentransportsystems, wenn das Prüfmodul feststellt, dass die Angabe angibt, dass mindestens eine weitere Fahrt erlaubt ist. Andernfalls kann eine weitere Transportfahrt verweigert werden.

Gemäß einer weiteren Ausführungsform der anmeldungsgemäßen Entwertervorrichtung kann das mindestens eine Sperrattribut eine Anzahl der mit dem zugehörigen Open Payment Ticketmedium durchgeführten Transportfahrten seit Aufnahme der elektrischen Mediumkennung des Open Payment Ticketmedium in den Sperrdatensatz sein. Das mindestens eine Sperrkriterium kann eine maximal zulässige Anzahl (z.B. können die Attributwerte zwischen 0 und 10, vorzugsweise zwischen 2 und 8) an durchführbaren Transportfahrten sein.

Das Ausgabemodul kann eingerichtet sein zum Verweigern eines Nutzens des Personentransportsystems, wenn das Prüfmodul feststellt, dass die Anzahl der mit dem zugehörigen Open Payment Ticketmedium durchgeführten Transportfahrten gleich oder größer ist als die maximal zulässige Anzahl an durchführbaren Transportfahrten. Das Ausgabemodul kann eingerichtet sein zum Zulassen eines Nutzens des Personentransportsystems, wenn das Prüfmodul feststellt, dass die Anzahl der mit dem zugehörigen Open Payment Ticketmedium durchgeführten Transportfahrten gleich oder kleiner ist als die maximal zulässige Anzahl an durchführbaren Transportfahrten.

Insbesondere für den Fall, dass die Aufnahme einer elektronischen Mediumkennung in den Sperrdatensatz fehlerhaft war, kann bei dieser Ausführungsform erreicht werden, dass der Nutzer zunächst das Personentransportsystem weiter nutzen kann und der Fehler, der zur Aufnahme der elektronischen Mediumkennung in den Sperrdatensatz führte, währenddessen beseitigt werden kann. Technisch kann bei dieser Ausführungsform jede durchgeführte Transportfahrt seit der Aufnahme der elektronischen Mediumkennung in den Sperrdatensatz durch einen Zähler (beispielsweise des Hintergrundsystems) gezählt werden. Der Sperrdatensatz, insbesondere das entsprechende Sperrattribut (bzw. dessen Attributwert), kann, getriggert durch den Zähler, bei jeder Änderung der Anzahl der durchgeführten Transportfahrten geändert bzw. aktualisiert werden. Sobald die Anzahl an durchgeführten Transportfahrten die maximal zulässige Anzahl an Transportfahrten erreicht hat oder überstiegen hat, insbesondere ohne dass der Grund, der zur Aufnahme der elektronischen Mediumkennung in den Sperrdatensatz führte, beseitigt ist, können weitere Transportfahrten verweigert werden. Die Nutzbarkeit kann in einfacher Weise verbessert werden, ohne dass die Sicherheit reduziert wird.

Gemäß einer alternativen oder zusätzlichen Ausführungsform der anmeldungsgemäßen Entwertervorrichtung kann das mindestens eine Sperrattribut ein Zeitpunkt der Aufnahme der zugehörigen gesperrten elektronischen Mediumkennung in den Sperrdatensatz sein. Das mindestens eine Sperrkriterium kann eine maximal zulässige Zeitdauer sein. Das Ausgabemodul kann eingerichtet sein zum Verweigern eines Nutzens des Personentransportsystems, wenn das Prüfmodul feststellt, dass eine Zeitdauer seit der Aufnahme der elektronischen Mediumkennung in den Sperrdatensatz gleich oder größer ist als die maximal zulässige Zeitdauer. Das Ausgabemodul kann eingerichtet sein zum Zulassen eines Nutzens des Personentransportsystems, wenn das Prüfmodul feststellt, dass eine Zeitdauer seit der Aufnahme der elektronischen Mediumkennung in den Sperrdatensatz gleich oder kleiner ist als die maximal zulässige Zeitdauer.

Auch bei dieser Ausführungsform ist von besonderem Vorteil, dass für den Fall, dass die Aufnahme einer elektronischen Mediumkennung in den Sperrdatensatz fehlerhaft war, der Nutzer zunächst das Personentransportsystem weiter nutzen kann und der Fehler, der zur Aufnahme der elektronischen Mediumkennung in den Sperrdatensatz führte, währenddessen beseitigt werden kann. Technisch kann hierzu das Prüfmodul mit einem Zeitmodul in der Entwertervorrichtung implementiert sein. Das Zeitmodul der Entwertervorrichtung kann mit einem (Master-)Zeitmodul des Hintergrundsystems synchronisiert sein. Insbesondere kann jede Entwertervorrichtung über ein (Slave-)Zeitmodul verfügen. Jedes dieser Zeitmodule kann mit dem Zeitmodul des Hintergrundsystems synchronisiert sein. Insbesondere kann das Zeitmodul des Hintergrundsystems die (System-)Zeit vorgeben.

Wenn das Vergleichsmodul eine gesperrte elektronische Mediumkennung identifiziert hat, kann das Zeitmodul der Entwertervorrichtung die augenblickliche Zeit oder den Erfassungszeitpunkt der elektronischen Mediumkennung, die als gesperrt gilt, mit dem genannten Aufnahmezeitpunkt vergleichen. Der Aufnahmezeitpunkt kann durch das Zeitmodul des Hintergrundsystems als Attributwert gesetzt werden.

Wenn das Prüfmodul bzw. das Zeitmodul des Prüfmoduls feststellt, dass die bestimmte Zeitdifferenz zwischen dem Aufnahmezeitpunkt und der augenblicklichen Zeit oder dem Erfassungszeitpunkt gleich oder größer ist als die maximal zulässige Zeitdauer, dann kann eine weitere Transportfahrt durch das Ausgabemodul verweigert werden. Andernfalls kann eine weitere Transportfahrt durch das Ausgabemodul zugelassen werden. Die Nutzbarkeit kann in einfacher Weise verbessert werden, ohne dass die Sicherheit reduziert wird.

Gemäß einer besonders bevorzugten Ausführungsform der anmeldungsgemäßen Entwertervorrichtung kann das mindestens eine Sperrattribut ein geographischer Fahrtdatensatz sein, der eine Stammstrecke des Nutzers des Open Payment Ticketmediums der gesperrten elektronischen Mediumkennung repräsentiert bzw. definiert.

Unter einer Stammstrecke eines Nutzers ist insbesondere eine (Transport-)Strecke bzw. ein Transportweg zu verstehen, die/der der Nutzer (bzw. die elektronische Mediumkennung) zumindest mit einer bestimmten minimalen Häufigkeit pro Zeiteinheit (z.B. zwischen 2- und 5-mal pro Woche und/oder zwischen 5- und 20-mal pro Monat und/oder dergleichen) zurücklegt. Optional kann vorgesehen sein, dass dies mit einer bestimmten Regelmäßigkeit erfolgen muss (z.B. in 4 von 5 Wochen oder in 3 von 4 Monaten etc.).

Die Stammstrecke kann zumindest durch einen Fahrtdatensatz definiert sein, der zumindest den Fahrtstartpunkt und den Fahrtendpunkt der Stammstrecke (und ggf. mindestens ein Zwischenhalt und/oder Umsteigepunkt) enthält. Beispielsweise kann ein Fahrtstartpunkt und/oder Fahrtendpunkt (und/oder Zwischenhalt und/oder Umsteigepunkt) durch geographische Koordinaten (z.B. GPS-Koordinaten, eine Haltstelle bzw. Kennung der Haltestelle etc.) und/oder einer Kennung der jeweiligen Entwertervorrichtung definiert sein.

Beispielsweise bei einer Entwertervorrichtung, die unbeweglich in einem Haltestellenbereich des Personentransportsystems angeordnet ist, kann eine Kennung der Entwertervorrichtung zur Definition eines Fahrtstartpunkt und/oder eines Fahrtendpunkt (und/oder Zwischenhalt und/oder Umsteigepunkt) verwendet werden. Wenn die Entwertervorrichtung fest in einem Transportfahrzeug angeordnet ist und somit mobil ist, kann zur Definition eines Fahrtstartpunkt und/oder Fahrtendpunkt (und/oder Zwischenhalt und/oder Umsteigepunkt) ein geographischer Koordinatensatz und/oder eine Kennung der Entwertervorrichtung und/oder eine Kennung des Transportfahrzeugs und/oder transportfahrzeugseitig ermittelte Haltestellenkennung verwendet werden.

Das mindestens eine Sperrkriterium kann eine Standortangabe bzw. Positionsangabe der Entwertervorrichtung sein. Die Standortangabe kann eine Kennung der Entwertervorrichtung sein, insbesondere wenn die Entwertervorrichtung unbeweglich in einem Haltestellenbereich des Personentransportsystems angeordnet ist. Alternativ oder zusätzlich kann die Standortangabe bei Bedarf durch ein Positionsbestimmungsmodul (z.B. ein GPS-Modul und/oder Haltestelle und/oder dergleichen) des Prüfmoduls bestimmt werden. Wenn das Vergleichsmodul eine gesperrte elektronische Mediumkennung identifiziert hat, kann das Positionsbestimmungsmodul die augenblickliche Position bzw. die augenblickliche Standortangabe der Entwertervorrichtung bestimmen.

Das Prüfmodul kann eingerichtet sein zum Feststellen, ob die Standortangabe in dem geographischen Fahrtdatensatz enthalten ist. Insbesondere kann das Prüfmodul die Standortangabe mit dem geographischen Fahrtdatensatz vergleichen. Beispielsweise kann eine Standortangabe in Form einer Kennung der Entwertervorrichtung, die die elektronische Mediumkennung erfasst hat, mit der mindestens einen Entwertervorrichtungskennung des geographischen Fahrtdatensatzes verglichen werden. Alternativ kann eine Standortangabe in Form eines detektierten geographischen Koordinatendatensatzes der Entwertervorrichtung, die die elektronische Mediumkennung erfasst hat, mit dem mindestens einen geographischen Koordinatendatensatz des geographischen Fahrtdatensatzes (mit einem bestimmten Toleranzbereich) verglichen werden.

Das Ausgabemodul kann eingerichtet sein zum Verweigern eines Nutzens des Personentransportsystems, wenn das Prüfmodul feststellt, dass die Standortangabe nicht in dem geographischen Fahrtdatensatz enthalten ist. Das Ausgabemodul kann eingerichtet sein zum Zulassen eines Nutzens des Personentransportsystems, wenn das Prüfmodul feststellt, dass die Standortangabe in dem geographischen Fahrtdatensatz enthalten ist. Insbesondere wird bei dieser Ausführungsform die Nutzbarkeit noch weiter verbessert, indem der Nutzer weiter das Personentransportsystem auf seiner/ihrer Stammstrecke nutzen kann, während die Sicherheit beispielsweise während der maximal zulässigen Zeitdauer (in der der Fehler, der zur Aufnahme der elektronischen Mediumkennung in den Sperrdatensatz führte, währenddessen beseitigt werden kann) nur geringfügig reduziert wird, da Transportfahrten außerhalb der Stammstrecke verweigert werden.

Gemäß einer weiteren Ausführungsform der anmeldungsgemäßen Entwertervorrichtung kann das mindestens eine Sperrattribut ein offener Geldbetrag sein. Das mindestens eine Sperrkriterium kann ein maximal zulässiger (offener) Geldbetrag sein, d.h. ein zur Zahlung fälliger Betrag aus mindestens einer früheren Transportfahrt mit der zugehörigen elektronischen Mediumkennung, der jedoch dem Transportdienstleister bisher nicht gutgeschrieben werden konnte. Das Ausgabemodul kann eingerichtet sein zum Verweigern eines Nutzens des Personentransportsystems, wenn das Prüfmodul feststellt, dass der offene Geldbetrag gleich oder größer ist als der maximal zulässige Geldbetrag. Das Ausgabemodul kann eingerichtet sein zum Zulassen eines Nutzens des Personentransportsystems, wenn das Prüfmodul feststellt, dass der offene Geldbetrag gleich oder kleiner ist als der maximal zulässige Geldbetrag. Die Sicherheit kann noch weiter verbessert werden.

Gemäß einer weiteren Ausführungsform der anmeldungsgemäßen Entwertervorrichtung kann das mindestens eine Sperrattribut eine Vielfahrerangabe sein. Eine Vielfahrerangabe kann insbesondere dann vorliegen, wenn mit der zugehörigen elektronischen Mediumkennung eine bestimmte Anzahl von Transportfahrten pro Zeiteinheit (z.B. mehr als 3 Transportfahrten pro Woche, mehr als 7 Transportfahrten pro Monat und/oder dergleichen) erreicht oder überschritten ist.

In einem einfachen Fall kann das Sperrkriterium lediglich angeben, dass, wenn eine Vielfahrerangabe für die gesperrte elektronische Mediumkennung vorliegt, ein Nutzen des Transportsystems zugelassen ist. Wenn eine Vielfahrerangabe für die gesperrte elektronische Mediumkennung nicht vorliegt, kann ein Nutzen des Transportsystems verweigert werden.

Alternativ oder zusätzlich kann eine Vielfahrerangabe dazu führen, dass ein weiteres Sperrkriterium angepasst ist. Beispielsweise kann bei Vorliegen einer Vielfahrerangabe die maximal zulässige Anzahl an Transportfahrten um eine bestimmte Anzahl (z.B. zwischen 1 und 10, vorzugsweise zwischen 2 und 5) erhöht werden und/oder die maximal zulässige Zeitdauer um eine Verlängerungszeitdauer (z.B. zwischen 12 h und 10 Tage, vorzugsweise zwischen 2 und 5 Tagen) erhöht werden und/oder auch Transportfahrten außerhalb der Stammstrecke zugelassen sein.

Bei Varianten der Anmeldung kann ein Sperrattribut insbesondere in Form einer Vielfahrerangabe in einem separaten Vielfahrerdatensatz vorliegen, der in dem Datenspeicher der Entwertervorrichtung gespeichert ist. Beispielsweise kann das Hintergrundsystem an die mindestens eine Entwertervorrichtung, vorzugsweise an sämtliche Entwertervorrichtungen des Personentransportsystems, einen Vielfahrerdatensatz versenden. Die mindestens eine Entwertervorrichtung kann einen empfangenen Vielfahrerdatensatz in dem Datenspeicher speichern. Das Prüfmodul kann auf den Vielfahrerdatensatz zugreifen, wenn eine gesperrte elektronische Mediumkennung erfasst wurde.

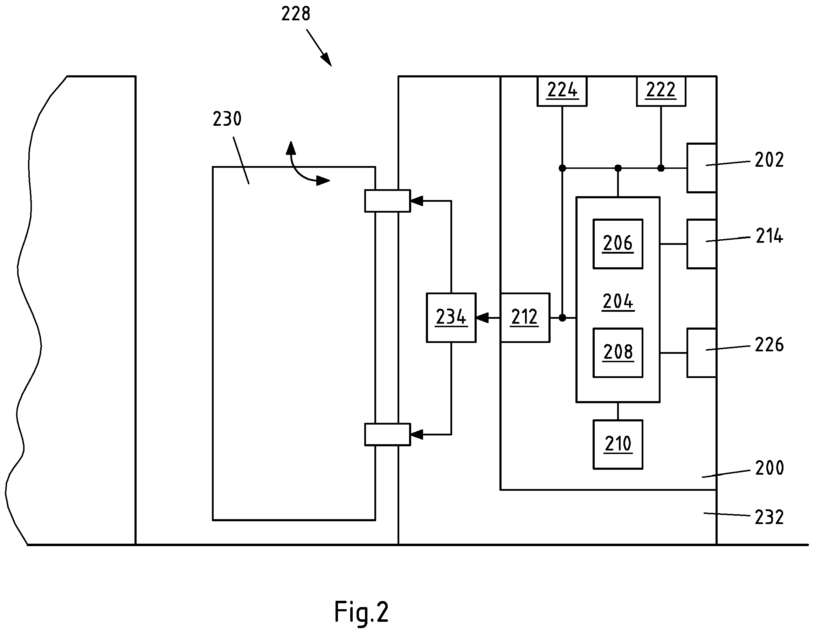

Wie bereits beschrieben wurde, kann ein Sperrdatensatz in Form einer Zuordnungstabelle gebildet sein. Vorzugsweise können jeder gesperrten elektronischen Mediumkennung zwei oder mehr der vorbeschriebenen Sperrattribute jeweils mit einem Sperrattributwert zugeordnet sein. Eine lediglich beispielhafte bevorzugte Zuordnungstabelle ist in nachfolgender Figur 2 abgebildet:

**Tabelle 2**

| **EPAN bzw. Hashwert der EPAN** | **Zusätzlichen Fahrten erlaubt** | **In dem Sperrdatensatz seit** | **Anzahl an durchgeführten Fahrten seit Aufnahme** | **geographischer Fahrtdatensatz** | **Offener Betrag (€)** |
|---|---|---|---|---|---|
| 123456789123 | ja | 5.7.22, 14:12:33 | 5 | Datensatz_1 | 7,22 |
| 456789123456 | ja | 3.6.22, 22:01:13 | 3 | Datensatz_2 | 1,20 |
| 987654321987 | nein | 9.7.22, 08:43:56 | n.A. | Nicht vorhanden | 10,15 |
| ... | ... | ... | ... | ... | ... |

Gemäß einer weiteren bevorzugten Ausführungsform der anmeldungsgemäßen Entwertervorrichtung kann das Ausgabemodul eingerichtet sein zum Verweigern eines Nutzens des Personentransportsystems durch Ansteuern eines Aktors einer Durchgangssperre, derart, dass ein Sperrelement der Durchgangssperre in einer Sperrposition bleibt oder in die Sperrposition bewegt wird. Das Ausgabemodul kann eingerichtet sein zum Zulassen eines Nutzens des Personentransportsystems durch Ansteuern eines Aktors einer Durchgangssperre, derart, dass ein Sperrelement der Durchgangssperre in einer Freigabeposition bleibt oder in die Freigabeposition bewegt wird.

Vorzugsweise kann eine Durchgangssperre eine anmeldungsgemäße Entwertervorrichtung umfassen oder eine anmeldungsgemäße Entwertervorrichtung kann mit einer Durchgangssperre verbunden sein. Eine Durchgangssperre ist insbesondere ein Gate zu und/oder von einem kontrollierten Bereich, also einem Bereich, der nur mit einer berechtigten elektronischen Mediumkennung betretbar ist.

Eine Durchgangssperre verfügt als Sperrelement beispielsweise über mindestens eine schwenkbare, zurückziehbare und/oder teleskopierbare Tür. Auch kann die Durchgangssperre als Drehkreuz gebildet sein. Darüber hinaus gib es Durchgangssperren ohne strukturelle Sperrelemente, die die Zulässigkeit oder Nicht-Zulässigkeit des Durchgehens ausschließlich optisch und/oder akustisch anzeigen.

Im Ausgangszustand kann die Durchgangssperre in der Regel gesperrt sein. Das bedeutet insbesondere, dass das Sperrelement in der Sperrposition einen Nutzer am Durchgehen durch die Durchgangssperre physisch hindert. In anderen Fällen kann die Durchgangssperre im Ausgangszustand geöffnet sein und sich nur dann schließen, wenn ein Nutzer ohne gültige Zugangsberechtgung versucht, das Gate zu passieren. - Ohne Beschränkung der Allgemeinheit wird nachfolgend davon ausgegangen, dass das Gate im Ausgangszustand gesperrt ist und bei einer positiven Prüfung der Zugangsberechtigung eines Nutzers für das Durchgehen des Nutzers geöffnet werden soll.

Insbesondere das Ausgabemodul kann einen Aktor der Durchgangssperre ansteuern zum Verfahren des Sperrelements von der Sperrposition in die Freigabeposition und/oder umgekehrt. Beispielsweise kann das Ausgabemodul in Form eines Steuermoduls gebildet sein oder ein Steuermodul der Durchgangssperre kann von dem zuvor beschriebenen Ausgabemodul angesteuert werden und/oder das Ausgabemodul umfassen. Ein Freigeben eines Passierens einer Durchgangssperre, also ein Zulassen eines Nutzers des Personentransportsystems, durch ein Ausgabemodul umfasst insbesondere ein Ansteuern, durch das Ausgabemodul, des Aktors der Durchgangssperre, derart, dass das Sperrelement von der Sperrposition in die Freigabeposition bewegt wird. Ein Verweigern eines Nutzen des Personentransportsystems, also ein Verweigern eines Passierens der Durchgangssperre durch ein Ausgabemodul umfasst insbesondere ein Ansteuern, durch das Steuermodul, des Aktors der Durchgangssperre, derart, dass das Sperrelement von der Freigabeposition in die Sperrposition bewegt wird oder in der Sperrposition verbleibt.

Alternativ oder vorzugweise zusätzlich kann das Ausgabemodul eingerichtet sein zum Verweigern eines Nutzens des Personentransportsystems durch Ansteuern mindestens einer optischen Anzeige der Entwertervorrichtung, derart, dass eine Verweigerungsinformation durch die mindestens eine optische Anzeige (z.B. Display, Leuchtmodul etc.) angezeigt wird. Beispielsweise kann auf der optischen Anzeige ein Text angezeigt werden, der angibt, dass der Zugang zu dem Transportfahrzeug verweigert wird. Alternativ oder zusätzlich kann die optische Anzeige in einer bestimmten Signalfarbe (z.B. rot) leuchten, um ein Verweigern des Zugangs zu dem Transportfahrzeug anzuzeigen. Ein Zugang zu dem Transportfahrzeug bei einer nicht in dem Sperrdatensatz enthaltenen elektronischen Mediumkennung kann beispielsweise durch einen entsprechenden Text und/oder eine bestimmte Signalfarbe (z.B. grün) angezeigt werden, unter Steuerung durch das Ausgabemodul.

Wenn eine erfasste elektronische Mediumkennung eine gesperrte elektronische Mediumkennung ist und das mindestens eine Sperrattribut das mindestens eine Sperrkriterium erfüllt, dann kann das Ausgabemodul eingerichtet sein zum Ansteuern der mindestens einen optischen Anzeige derart, dass eine Sperr-Zulassungsinformation durch die mindestens eine optische Anzeige angezeigt wird. Eine Sperr-Zulassungsinformation (beispielsweise ein entsprechender Text und/oder eine Signalfarbe (z.B. orange)) kann insbesondere dem Nutzer anzeigen, dass seine/ihre elektronische Mediumkennung als gesperrt gilt, jedoch trotzdem ein Nutzen des Personentransportsystems zugelassen wird. Die Nutzbarkeit wird noch weiter verbessert. Ein Fehler, der zur Aufnahme in die Sperrliste geführt hat, kann beseitigt werden, da der Nutzer über die Sperrung der elektronischen Mediumkennung informiert wird.

Alternativ oder zusätzlich kann das Ausgabemodul eingerichtet sein zum Verweigern eines Nutzens des Personentransportsystems durch Ansteuern mindestens einer akustischen Schnittstelle (z.B. Lautsprecher) der Entwertervorrichtung, derart, dass eine Verweigerungsinformation durch die mindestens akustische Schnittstelle ausgegeben wird. Beispielsweise kann die akustische Schnittstelle eine Durchsage ausgeben, die angibt, dass der Zugang zu dem Transportfahrzeug verweigert wird. Auch kann die akustische Schnittstelle einen bestimmten Signalton ausgeben, um ein Verweigern des Zugangs zu dem Transportfahrzeug anzuzeigen. Ein Zugang zu dem Transportfahrzeug bei einer nicht in dem Sperrdatensatz enthaltenen elektronischen Mediumkennung kann beispielsweise durch eine entsprechende Durchsage und/oder einen entsprechenden Signalton ausgegeben werden, unter Steuerung durch das Ausgabemodul.

Wenn eine erfasste elektronische Mediumkennung eine gesperrte elektronische Mediumkennung ist und das mindestens eine Sperrkriterium erfüllt, dann kann das Ausgabemodul eingerichtet sein zum Ansteuern der mindestens einen akustischen Schnittstelle derart, dass eine Sperr-Zulassungsinformation durch die mindestens eine akustische Schnittstelle ausgegeben wird. Eine Sperr-Zulassungsinformation (beispielsweise eine entsprechende Durchsage und/oder ein Signalton) kann insbesondere dem Nutzer anzeigen, dass seine/ihre elektronische Mediumkennung als gesperrt gilt, jedoch trotzdem ein Nutzen des Personentransportsystems zugelassen wird. Die Nutzbarkeit wird noch weiter verbessert. Ein Fehler, der zur Aufnahme in die Sperrliste geführt hat, kann beseitigt werden, da der Nutzer über die Sperrung der elektronischen Mediumkennung informiert wird.

Darüber hinaus kann das Ausgabemodul alternativ oder zusätzlich eingerichtet sein zum Verweigern eines Nutzens des Personentransportsystems durch Aussenden eines Funksignals (insbesondere eines Bluetooth-Signals), enthaltend eine durch das Open-Payment Ticketmedium (z.B. ein Smartphone oder dergleichen) oder ein (Nutzer-) Endgerät des Nutzers auslesbare Verweigerungsinformation. Die Verweigerungsinformation kann beispielsweise eine Instruktion enthalten, die bei einer Ausführung durch das Open-Payment Ticketmedium oder das Endgerät ein akustisches und/oder graphisches Anzeigen (z.B. Text, Signalfarbe, Durchsage, Signalton etc.) bewirkt, dass der Zugang zu dem Transportfahrzeug verweigert wird. In entsprechender Weise kann das Ausgabemodul bei einer nicht in dem Sperrdatensatz enthaltenen elektronischen Mediumkennung eingerichtet sein zum Zulassen eines Nutzens des Personentransportsystems durch Aussenden eines Funksignals (insbesondere eines Bluetooth-Signals), enthaltend eine durch das Open-Payment Ticketmedium oder ein Endgerät des Nutzers auslesbare Zulassungsinformation. Die Zulassungsinformation kann beispielsweise eine Instruktion enthalten, die bei einer Ausführung durch das Open-Payment Ticketmedium oder das Endgerät ein akustisches und/oder graphisches Anzeigen (z.B. Text, Signalfarbe, Durchsage, Signalton etc.) bewirkt, dass der Zugang zu dem Transportfahrzeug zugelassen wird.

Wenn eine erfasste elektronische Mediumkennung eine gesperrte elektronische Mediumkennung ist und das mindestens eine Sperrattribut das mindestens eine Sperrkriterium (aber) erfüllt, dann kann das Ausgabemodul eingerichtet sein zum Zulassen eines Nutzens des Personentransportsystems durch Aussenden eines Funksignals (insbesondere eines Bluetooth-Signals), enthaltend eine durch das Open-Payment Ticketmedium oder ein Endgerät des Nutzers auslesbare Sperr-Zulassungsinformation. Eine Sperr-Zulassungsinformation kann beispielsweise eine Instruktion enthalten, die bei einer Ausführung durch das Open-Payment Ticketmedium oder das Endgerät ein akustisches und/oder graphisches Anzeigen (z.B. Text, Signalfarbe, Durchsage, Signalton etc.) bewirkt, dass seine/ihre elektronische Mediumkennung als gesperrt gilt, jedoch trotzdem ein Nutzen des Personentransportsystems zugelassen wird. Die Nutzbarkeit wird noch weiter verbessert. Ein Fehler, der zur Aufnahme in die Sperrliste geführt hat, kann beseitigt werden, da der Nutzer über die Sperrung der elektronischen Mediumkennung informiert wird.

Alternativ oder zusätzlich kann das Ausgabemodul eingerichtet sein zum Verweigern eines Nutzens des Personentransportsystems durch Aussenden einer Verweigerungsnachricht an ein der gesperrten elektronischen Mediumkennung zugeordnetes Nutzerkonto. Die Verweigerungsnachricht kann insbesondere eine Information enthalten, dass der Zugang zu dem Transportfahrzeug verweigert wird.

Alternativ oder zusätzlich kann das Ausgabemodul eingerichtet sein zum Aussenden einer Sperr-Zulassungsnachricht an ein der gesperrten elektronischen Mediumkennung zugeordnetes Nutzerkonto, wenn eine erfasste elektronische Mediumkennung eine gesperrte elektronische Mediumkennung ist und das mindestens eine Sperrkriterium erfüllt ist. Die Sperr-Zulassungsnachricht kann insbesondere eine Information enthalten, dass der Zugang zu dem Transportfahrzeug eigentlich gesperrt werden sollte und nur aufgrund des Erfüllens eines Sperrkriteriums gestattet wurde. Insbesondere kann die Sperr-Zulassungsnachricht Informationen darüber enthalten, wann oder auf welche Weise das Sperrkriterium voraussichtlich nicht mehr erfüllt wird und folglich das betroffene Medium für die Nutzung im Personentransportsystem wirksam gesperrt wird.

Ein weiterer Aspekt der Anmeldung ist ein Personentransportsystem. Das Personentransportsystem umfasst eine Mehrzahl von zuvor beschriebenen Entwertervorrichtungen. Das Personentransportsystem umfasst mindestens ein Hintergrundsystem mit mindestens einem Kommunikationsmodul. Das Kommunikationsmodul des Hintergrundsystems ist eingerichtet zum Senden des Sperrdatensatzes an die Mehrzahl von Entwertervorrichtungen, insbesondere an das jeweilige Kommunikationsmodul der jeweiligen Entwertervorrichtung.

Das Hintergrundsystem (auch als Backend-System bezeichnet) kann durch mindestens eine Rechenvorrichtung gebildet sein, beispielsweise in Form eines Servers. Zum Beispiel kann eine Mehrzahl von verteilt angeordneten Rechenvorrichtungen vorgesehen sein. Auch kann als Hintergrundsystem ein Cloudsystem implementiert sein.

Insbesondere kann das Hintergrundsystem ein Erstellungsmodul umfassen. Das Erstellungsmodul kann eingerichtet sein zum Erstellen eines (zuvor beschriebenen) Sperrdatensatzes (z.B. einer Zuordnungstabelle).

Der erstellte Sperrdatensatz kann dem Kommunikationsmodul des Hintergrundsystems bereitgestellt werden. Das Kommunikationsmodul des Hintergrundsystems kann den erstellten Sperrdatensatz über ein (zuvor beschriebenes) Kommunikationsnetz an die Mehrzahl von Entwertungsvorrichtungen, insbesondere an sämtliche Entwertungsvorrichtungen des Personentransportsystems, übertragen. Wie bereits beschrieben wurde, kann ein empfangener Sperrdatensatz durch ein jeweiliges Speichermodul in dem jeweiligen Datenspeicher der jeweiligen Entwertungsvorrichtung gespeichert werden.

Gemäß einer Ausführungsform des anmeldungsgemäßen Personentransportsystems kann das Hintergrundsystem ferner mindestens ein Fahrtrekonstruktionsmodul umfassen. Das Fahrtrekonstruktionsmodul kann eingerichtet sein zum Rekonstruieren einer durchgeführten Transportfahrt, zumindest basierend auf einem von einer der Entwertervorrichtungen empfangenen Entwertungsdatensatz in Form eines Check-In Datensatzes, enthaltend zumindest die erfasste elektronische Mediumkennung.

Wie bereits beschrieben wurde, kann ein Entwertungsdatensatz vorzugsweise mindestens ein weiteres Entwertungsdatum enthalten. Die Fahrtrekonstruktion basiert zumindest auf einem Check-In Datensatz, der den Beginn der zu rekonstruierenden Transportfahrt definiert.

Ein Check-In Datensatz wird durch eine Entwertervorrichtung an das Hintergrundsystem übertragen. Das Bereitstellen des Check-In Datensatzes kann ein Übertragen, durch eine Entwertervorrichtung, des Check-In Datensatzes umfassen.

Gemäß einer Ausführungsform des anmeldungsgemäßen Personentransportsystems kann das Fahrtrekonstruktionsmodul eingerichtet sein zum Rekonstruieren einer durchgeführten Transportfahrt zusätzlich basieren auf einem bereitgestellten Check-Out-Datensatz, enthaltend zumindest dieselbe elektronische Medienkennung wie der Check-In-Datensatz.

Das Bereitstellen eines Check-Out Datensatzes kann das Erstellen eines (zuvor beschriebenen) Entwertungsdatensatzes durch die Entwertervorrichtung und insbesondere ein Übertragen des erstellten Entwertungsdatensatzes an das Hintergrundsystem umfassen (im Fall eines CICO-Systems).

Alternativ oder zusätzlich kann das Bereitstellen eines Check-Out Datensatzes auch durch das Hintergrundsystem (oder einer weiteren Rechenvorrichtung) erfolgen (im Fall eines CIBO-Systems; "Check-In / Be-Out"). Beispielsweise können Sensordaten, aus denen auf die Position des Nutzers geschlossen werden kann, dem Hintergrundsystem bereitgestellt werden. Basierend auf Referenzpositionsdaten (beispielsweise des Transportfahrzeugs und/oder Haltestellenbereiche) kann dann geschlossen werden, ob ein Nutzer das Transportfahrzeug und/oder einen Haltestellenbereich verlassen hat. Dann kann durch das Hintergrundsystem ein entsprechender Check-Out Datensatz generiert werden. Ein CIBO-System kann insbesondere zur Anwendung kommen, wenn die verwendeten Ticketmedien nicht nur eine elektronische Mediumkennung aufweisen, die von einer Entwertervorrichtung beim Check.-In gelesen werden kann, sondern auch über eigene Sensorik verfügen (z.B. GPS, Lagen- und/oder Erschütterungssensor, Kompass etc.) sowie eine Datenverbindung mit dem Hintergrundsystem herstellen können, so dass die elektronischen Medien mindestens Sensordaten oder Anwesenheitsdaten in einem Transportfahrzeug an das Hintergrundsystem senden können. Daraus kann zugehörig zu einem Check-In Vorgang ein späterer Be-Out-Zustand konstruiert werden, also ein Verlassen (bzw. das Verlassen-Haben) des Transportfahrzeugs ohne einen Check-Out durch den Nutzer. Für ein CIBO-System werden insbesondere mobile Endgeräte wie z.B. Smartphones verwendet.

Ferner kann das Hintergrundsystem mindestens ein Generierungsmodul umfassen. Das Generierungsmodul kann eingerichtet sein zum Generieren eines Abrechnungsdatensatzes, zumindest basierend auf der rekonstruierten Transportfahrt und insbesondere der elektronischen Mediumkennung. Es versteht sich, dass bei Varianten der Anmeldung weitere Daten, wie Tarifdaten etc., berücksichtigt werden können.

Das Kommunikationsmodul des Hintergrundsystems kann eingerichtet sein zum Senden einer Zahlungsanfrage, enthaltend den Abrechnungsdatensatz, an eine Rechenvorrichtung (z.B. ein Server) eines Zahlungsdienstleisters (z.B. eine Bank). Der Zahlungsdienstleister kann insbesondere von der elektronischen Mediumkennung abhängen.

Gemäß einer weiteren bevorzugten Ausführungsform des anmeldungsgemäßen Personentransportsystems kann das Kommunikationsmodul des Hintergrundsystems eingerichtet sein zum Empfangen einer Zahlungsantwort auf die gesendete Zahlungsanfrage. Das Hintergrundsystem kann mindestens ein (zuvor beschriebenes) Erstellungsmodul umfassen. Das Erstellungsmodul kann eingerichtet sein zum Erstellen eines (aktualisierten) Sperrdatensatzes, zumindest basierend auf der empfangenen Zahlungsantwort.

Besonders bevorzugt kann die Zahlungsantwort eine Zahlungsablehnungsinformation und mindestens einen Zahlungsablehnungsgrund umfassen. Das Erstellungsmodul kann eingerichtet sein zum Erstellen eines (aktualisierten) Sperrdatensatzes, basierend auf der Zahlungsablehnungsinformation, dem mindestens einen Zahlungsablehnungsgrund und mindestens einem vorgegebenen Sperrgenerierungskriterium.

Insbesondere kann eine entsprechende elektronische Mediumkennung bei Erhalt einer Zahlungsablehnungsinformation durch das Erstellungsmodul in den Sperrdatensatz aufgenommen werden. Das Erstellungsmodul kann eingerichtet sein zum Zuordnen des mindestens einen Sperrattributs (mit mindestens einem Sperrattributwert) zu dieser elektronischen Mediumkennung, basierend auf dem mindestens einen Zahlungsablehnungsgrund.

Ein Zahlungsablehnungsgrund kann beispielsweise sein, dass das Open Payment Ticketmedium der elektronischen Mediumkennung gesperrt wurde (beispielsweise aufgrund eines Diebstahls und/oder Verlusts des Ticketmediums), dass das Gültigkeitsdatum des Open Payment Ticketmediums der elektronischen Mediumkennung abgelaufen ist, dass das Kartenlimit des Open Payment Ticketmediums der elektronischen Mediumkennung erreicht wurde, oder dass ein Velocity Check des Zahlungsdienstleisters (z.B. eine Bank) zu einer Ablehnung geführt hat, insbesondere aufgrund einer zu häufigen Nutzung des Open Payment Ticketmediums innerhalb einer bestimmten Zeitdauer. Es versteht sich, dass weitere Zahlungsablehnungsgründe angegeben werden können.

Beispielsweise kann bei einem Ablauf der Gültigkeit oder bei einer Sperrung des Ticketmediums die Angabe, ob mindestens eine weitere Transportfahrt mit dem zugehörigen Open Payment Ticketmedium erlaubt ist oder nicht, durch das Erstellungsmodul verneint werden. Ferner kann beispielsweise bei einem Velocity Check oder bei Erreichen des Kartenlimits die Angabe, ob mindestens eine weitere Transportfahrt mit dem zugehörigen Open Payment Ticketmedium erlaubt ist oder nicht, durch das Erstellungsmodul bejaht werden. Das mindestens eine Sperrgenerierungskriterium definiert insbesondere den Zusammenhang zwischen einem Sperrattribut (bzw. dessen Wert) und einem Zahlungsablehnungsgrund.

Zusätzlich kann das Erstellungsmodul vorzugsweise weitere Sperrattribute (bzw. dessen Sperrattributwerte) setzen, wie die Anzahl von durchgeführten Transportfahrten (z.B. 0) seit Aufnahme in den Sperrdatensatz, den Aufnahmezeitpunkt etc. Dies kann durch das mindestens eine Sperrgenerierungskriterium zusätzlich definiert sein.

Alternativ oder zusätzlich kann das Erstellungsmodul eingerichtet sein zum Erstellen des Sperrdatensatzes, basierend auf der Zahlungshistorie der (zu sperrenden) elektronischen Mediumkennung in dem Personentransportsystem. Wenn beispielweise das Erstellungsmodul feststellt, dass bei einer elektronischen Mediumkennung die Bezahlung der durchgeführten Transportfahrten (nahezu) stets erfolgt ist (also eine positive Zahlungshistorie vorliegt), kann die Angabe, ob mindestens eine weitere Transportfahrt mit dem zugehörigen Open Payment Ticketmedium erlaubt ist oder nicht, durch das Erstellungsmodul bejaht werden. Wenn das Erstellungsmodul zum Beispiel feststellt, dass bei einer elektronischen Mediumkennung die Bezahlung der durchgeführten Transportfahrten (nahezu) stets problematisch war (also eine negative Zahlungshistorie vorliegt), kann die Angabe, ob mindestens eine weitere Transportfahrt mit dem zugehörigen Open Payment Ticketmedium erlaubt ist oder nicht, durch das Erstellungsmodul verneint werden.

Gemäß einer weiteren Ausführungsform des anmeldungsgemäßen Personentransportsystems kann das Erstellungsmodul eingerichtet sein zum Erstellen eines (aktualisierten) Sperrdatensatzes, basierend auf einer mit einer gesperrten elektronischen Mediumkennung durchgeführten Transportfahrt. Insbesondere kann das Erstellungsmodul einen Zähler umfassen, der die Anzahl an durchgeführten Transportfahrten zählt, die mit dem zugehörigeren Ticketmedium seit der Aufnahme der elektronischen Mediumkennung in den Sperrdatensatz durchgeführt wurden. Entsprechend dem Zähler kann dann der Sperrdatensatz, insbesondere bei jeder Änderung des Zählerstands, aktualisiert werden. Bei dem Beispiel der Tabelle 2 kann insbesondere die Anzahl der durchgeführten Fahrten seit Aufnahme erhöht werden.

Gemäß einer besonders bevorzugten Ausführungsform des anmeldungsgemäßen Personentransportsystems kann das Hintergrundsystem ferner mindestens ein Bestimmungsmodul umfassen. Das Bestimmungsmodul kann eingerichtet sein zum Bestimmen des geographischen Fahrtdatensatzes, der die Stammstrecke des Nutzer des Open Payment Ticketmediums des Nutzers der entsprechenden elektronischen Mediumkennung repräsentiert, basierend auf einer Vielzahl von empfangenen Entwertungsdatensätzen, jeweils enthaltend zumindest dieselbe elektronische Mediumkennung und eine Kennung der Entwertervorrichtung und/oder eine Position der Entwertervorrichtung während des Erfassungszeitpunkts der elektronischen Mediumkennung. Das Erstellungsmodul kann eingerichtet sein zum Erstellen eines (aktualisierten) Sperrdatensatzes, basierend auf dem bestimmten geographischen Fahrtdatensatz.

Insbesondere kann jeder Entwertungsdatensatz und/oder jede rekonstruierte Transportfahrt durch das Hintergrundsystem gespeichert werden. Das Bestimmungsmodul kann die gespeicherten (historischen) Entwertungsdatensätze und/oder die rekonstruierten Transportfahrten auswerten, insbesondere regelmäßig auswerten.

Wenn das Bestimmungsmodul bei der Auswertung feststellen kann, dass für dieselbe elektronische Mediumkennung dieselbe Strecke (vorzugsweise definiert durch Fahrtstartpunkt (z.B. eine bestimmte Entwertervorrichtungskennung und/oder bestimmter Koordinatensatz) und Fahrtendpunkt (z.B. eine bestimmte Entwertervorrichtungskennung und/oder bestimmter Koordinatensatz)) mit einer bestimmten minimalen Häufigkeit pro Zeiteinheit (z.B. zwischen 2- und 5-mal pro Woche und/oder zwischen 5- und 20-mal pro Monat und/oder dergleichen) zurückgelegt wurde, kann ein entsprechender geographischer Fahrtdatensatz bestimmt und insbesondere gespeichert werden, beispielsweise in einer Stammstreckendatenbank. Wenn dann eine elektronische Mediumkennung in den Sperrdatensatz aufgenommen werden soll, kann das Erstellungsmodul eingerichtet sein, die Stammstreckendatenbank nach einer Stammstrecke für diese elektronische Mediumkennung zu durchsuchen. Wenn festgestellt wird, dass eine Stammstrecke für die zu sperrende Mediumkennung vorhanden ist, kann in den Sperrdatensatz der entsprechende geographische Fahrtdatensatz als Sperrattribut(wert) durch das Erstellungsmodul aufgenommen werden.

Alternativ oder zusätzlich kann die mindestens eine Entwertervorrichtung ein Bestimmungsmodul umfassen. Das Bestimmungsmodul kann eingerichtet sein zum Bestimmen eines geographischen Fahrtdatensatzes, der die Stammstrecke des Nutzers des Open Payment Ticketmediums der entsprechenden elektronischen Mediumkennung repräsentiert, basierend auf einer Vielzahl von durch die Entwertervorrichtung erstellten Entwertungsdatensätzen, jeweils enthaltend zumindest dieselbe elektronische Mediumkennung. Die Entwertervorrichtung kann mindestens ein Aktualisierungsmodul umfassen. Das Aktualisierungsmodul kann eingerichtet sein zum Aktualisieren des Sperrdatensatzes mit dem bestimmten geographischen Fahrtdatensatz, wenn die elektronische Mediumkennung des Fahrtdatensatzes in dem Sperrdatensatz enthalten ist.

Insbesondere kann jeder Entwertungsdatensatz, der durch die Entwertervorrichtung generiert wird, durch diese Entwertervorrichtung gespeichert werden. Das Bestimmungsmodul der Entwertervorrichtung kann die gespeicherten (historischen) Entwertungsdatensätze auswerten, insbesondere regelmäßig auswerten.

Wenn das Bestimmungsmodul der Entwertervorrichtung bei der Auswertung feststellen kann, dass für dieselbe elektronische Mediumkennung Entwertungsdatensätze mit einer bestimmten minimalen Häufigkeit pro Zeiteinheit (z.B. zwischen 2- und 5-mal pro Woche und/oder zwischen 5- und 20-mal pro Monat und/oder dergleichen) generiert wurden, kann ein entsprechender geographischer Fahrtdatensatz bestimmt und insbesondere gespeichert werden, beispielsweise in einer Stammstreckendatenbank.

Die Stammstreckendatenbank kann beispielsweise in dem Hintergrundsystem implementiert sein. Wenn dann eine elektronische Mediumkennung in den Sperrdatensatz aufgenommen werden soll, kann/können das Erstellungsmodul und/oder das Aktualisierungsmodul eingerichtet sein, die Stammstreckendatenbank nach einer Stammstrecke für diese elektronische Mediumkennung zu durchsuchen. Wenn festgestellt wird, dass eine Stammstrecke für diese Mediumkennung vorhanden ist, kann in den Sperrdatensatz der entsprechende geographische Fahrtdatensatz als Sperrattribut(wert) durch das Erstellungsmodul und/oder das Aktualisierungsmodul aufgenommen werden.

Ferner kann das Kommunikationsmodul der Entwertervorrichtung eingerichtet sein zum Senden eines durch das Aktualisierungsmodul aktualisierten Sperrdatensatz an das Hintergrundsystem. Das Erstellungsmodul kann dann einen aktualisierten Sperrdatensatz erstellen, basierend auf dem erhaltenen aktualisierten Sperrdatensatz, und beispielsweise eine Verteilung an sämtliche Entwertervorrichtungen bewirken.

Gemäß einer weiteren Ausführungsform des anmeldungsgemäßen Personentransportsystem kann das Kommunikationsmodul des Hintergrundsystems zum wiederholenden Aussenden von Zahlungsanfragen für eine (vorzugsweise jede) in dem (augenblicklichen) Sperrdatensatz enthaltenen gesperrten elektronischen Mediumkennung eingerichtet sein, insbesondere unabhängig von einem Erfassen der gesperrten elektronischen Mediumkennung durch eine Entwertervorrichtung. Hierdurch kann insbesondere zeitnah festgestellt werden, ob ein offener Betrag inzwischen beglichen werden kann.

Alternativ oder zusätzlich kann gemäß einer weiteren Ausführungsform des anmeldungsgemäßen Personentransportsystems das Kommunikationsmodul des Hintergrundsystems eingerichtet sein, auf Seiten des Zahlungsdienstleisters einen "Request for Information" für eine gesperrten elektronischen Mediumkennung einzurichten; in diesem Fall informiert der Zahlungsdienstleister des Hintergrundsystem, sobald die gesperrte elektronischen Mediumkennung wieder entsperrt wurde. Damit kann ein wiederholtes Aussenden von (ggf. kostenpflichtigen) Zahlungsanfragen vermieden werden. Auch hierdurch kann insbesondere zeitnah festgestellt werden, ob ein offener Betrag inzwischen beglichen werden kann.

Das Erstellungsmodul kann eingerichtet sein zum Erstellen eines (aktualisierten) Sperrdatensatzes, basierend auf den jeweils erhaltenen Zahlungsantworten. Wenn sich aus einer Zahlungsantwort eine Änderung ergibt, kann der Sperrdatensatz für die entsprechende gesperrte elektronische Mediumkennung angepasst bzw. aktualisiert werden.

Wenn beispielsweise der offene Betrag inzwischen beglichen wurde, kann die entsprechende elektronische Mediumkennung von dem Sperrdatensatz entfernt werden. Wenn aber beispielsweise zunächst die Angabe, ob mindestens eine weitere Transportfahrt mit dem zugehörigen Open Payment Ticketmedium erlaubt ist oder nicht, durch das Erstellungsmodul aufgrund einer Velocity Check Rückmeldung bejaht wurde, und nun eine weitere (nachfolgende) Zahlungsantwort als Zahlungsablehnungsgrund eine Sperrung des Open Payment Ticketmediums bzw. der entsprechenden elektronischen Mediumkennung enthält, kann durch das Erstellungsmodul die Angabe, dass ob mindestens eine weitere Transportfahrt mit dem zugehörigen Open Payment Ticketmedium erlaubt ist oder nicht, (nun) verneint werden.

Gemäß einer weiteren Ausführungsform des Personentransportsystems kann das mindestens eine Sperrkriterium änderbar sein. Insbesondere kann das Hintergrundsystem eine Änderung vornehmen und dann das mindestens eine geänderte Sperrkriterium an die Mehrzahl von Entwertervorrichtungen verteilen.

Ein weiterer Aspekt der Anmeldung ist ein Verfahren, insbesondere ausführbar durch eine zuvor beschriebene Entwertervorrichtung (eines zuvor beschriebenen Personentransportsystems). Das Verfahren umfasst:
- Erfassen, durch ein Lesemodul einer Entwertervorrichtung eines Personentransportsystems, einer elektronischen Mediumkennung eines Open Payment Ticketmediums,
- wobei ein Sperrdatensatz in einem Datenspeicher der Entwertervorrichtung gespeichert ist,
- wobei der Sperrdatensatz mindestens eine gesperrte elektronische Mediumkennung und mindestens ein der gesperrten elektronischen Mediumkennung zugeordnetes Sperrattribut enthält,
- Identifizieren, durch ein Vergleichsmodul der Entwertervorrichtung, einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung,
- bei einer Identifizierung einer gesperrten elektronischen Mediumkennung, Prüfen, durch ein Prüfmodul der Entwertervorrichtung, ob das mindestens eine der identifizierten gesperrten elektronischen Mediumkennung zugeordnete Sperrattribut mindestens ein vorgegebenes Sperrkriterium erfüllt, und
- Zulassen, durch ein Ausgabemodul der Entwertervorrichtung, eines Nutzens des Personentransportsystems, wenn das Prüfmodul feststellt, dass das mindestens eine Sperrattribut das mindestens eine vorgegebene Sperrkriterium erfüllt.

Ein Modul oder eine Vorrichtung kann vorliegend zumindest teilweise aus Software und/oder zumindest teilweise aus Hardware gebildet sein. Insbesondere kann eine Vorrichtung/ein Modul geeignete Rechenelemente (z.B. Prozessor, Speicher etc.) umfassen, um Softwareelemente (bzw. Computercode) auszuführen. Es sei ferner angemerkt, dass Begriffe, wie "erste"; "zweite" etc. nicht eine Reihenfolge angeben, sondern insbesondere zur Unterscheidung zweier Elemente dienen.

Die Merkmale der Entwertervorrichtungen, Personentransportsysteme und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Entwertervorrichtung, das anmeldungsgemäße Personentransportsystem und das anmeldungsgemäße Verfahren auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Entwertervorrichtung gemäß der vorliegenden Anmeldung,
- Fig. 2: eine schematische Ansicht eines Ausführungsbeispiels einer Durchgangssperre gemäß der vorliegenden Anmeldung mit einem Ausführungsbeispiel einer Entwertervorrichtung gemäß der vorliegenden Anmeldung,
- Fig. 3: eine schematische Ansicht eines Ausführungsbeispiels eines Personentransportsystems gemäß der vorliegenden Anmeldung, und
- Fig. 4: ein Diagramm eines Ausführungsbeispiels eines Verfahrens gemäß der vorliegenden Anmeldung.

Ähnliche Elemente werden nachfolgend mit ähnlichen Bezugszeichen bezeichnet.

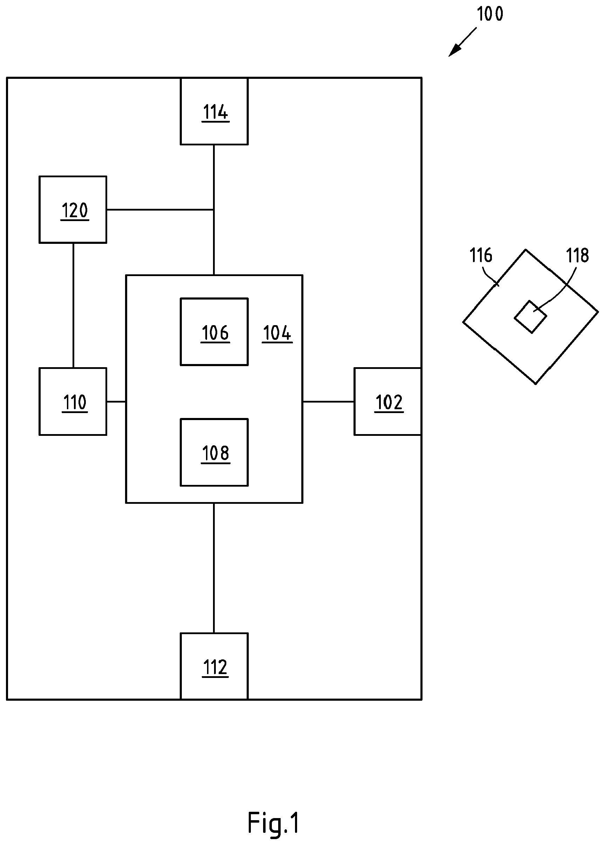

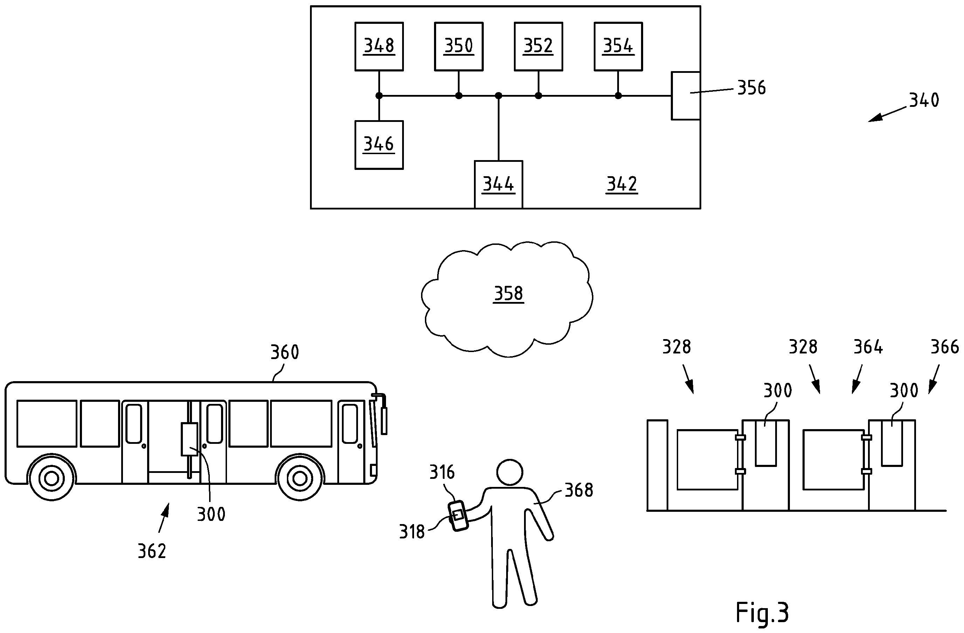

Die Figur 1 zeigt eine schematische Ansicht eines Ausführungsbeispiels einer Entwertervorrichtung 100 gemäß der vorliegenden Anmeldung. Die Entwertervorrichtung 100 dient dem Einsatz in einem Personentransportsystem (vgl. Fig. 3).

Die Entwertervorrichtung 100 umfasst mindestens ein Lesemodul 102, vorzugsweise ein NFC-Lesemodul 102. Bei Varianten der Anmeldung kann eine Entwertervorrichtung mindestens ein auf einer anderen Technologie basiertes Lesemodul (z.B. Bluetooth etc.) und/oder mindestens ein weiteres Lesemodul umfassen. Das Lesemodul 102 ist eingerichtet zum (technischen) Erfassen bzw. Lesen einer elektronischen Mediumkennung eines Open Payment Ticketmediums 116.

Ein Open Payment Ticketmedium 116 gemäß der vorliegenden Anmeldung kann zumindest ein Speichermittel 118 umfassen. Das Speichermittel 118 dient der Speicherung der elektronischen Mediumkennung des Ticketmediums 116. Die elektronische Mediumkennung ist insbesondere über eine nicht gezeigte (kontaktlose und/der kontaktbehaftete) Schnittstelle des Open Payment Ticketmediums 116 auslesbar.

Das Open Payment Ticketmedium 116 kann vorzugsweise ein kreditkartenbasiertes und/oder debitkartenbasiertes Ticketmedium116 sein. Bevorzugt kann das Open Payment Ticketmedium 116 eine Kreditkarte und/oder eine Debitkarte sein. Auch kann das kartenbasierte Open Payment Ticketmedium 116 ein mobiles Endgerät sein, auf dem eine Kreditkarte und/oder Debitkarte elektronisch abgebildet ist bzw. mit dem eine Kreditkarte und/oder Debitkarte elektronisch (eineindeutig) verknüpft ist. Nicht abschließende Beispiele eines solchen Konzepts sind Apple Pay, Google Pay oder PayPal.

Beispielhafte und nicht abschließende mobile Endgeräte sind hierbei Smartphones, Tablet-Computer, mobile Spielkonsolen, Laptops, Netbooks, Datenbrillen, Smart-Watches und ähnliche Wearables.

In einem Datenspeicher 110 der Entwertervorrichtung 100 ist ein Sperrdatensatz gespeichert. Der Sperrdatensatz enthält mindestens eine gesperrte elektronische Mediumkennung und mindestens ein der gesperrten elektronischen Mediumkennung zugeordnetes Sperrattribut. Beispielsweise kann der Sperrdatensatz entsprechend Tabelle 1 und/oder 2 gebildet sein.

Optional kann die Entwertervorrichtung 100 mindestens ein (Fern-)Kommunikationsmodul 114 umfassen, das eingerichtet sein kann, einen Sperrdatensatz zu erhalten. Insbesondere können aktualisierte Sperrdatensätze von einem Hintergrundsystem über das Kommunikationsmodul 114 empfangen werden. Wenn ein aktualisierter bzw. neuer Sperrdatensatz empfangen wird, kann ein optionales Speichermodul 120 diesen Sperrdatensatz als dann gültigen Sperrdatensatz in dem Datenspeicher 110 speichern.

Ferner umfasst die dargestellte Entwertervorrichtung 100 eine Prüfanordnung 104 mit mindestens einem Vergleichsmodul 106 und mindestens einem Prüfmodul 108.

Eine erfasste elektronische Mediumkennung kann durch das Lesemodul 102 der Prüfanordnung 104 zur Verfügung gestellt werden.

Das Vergleichsmodul 106 ist eingerichtet zum Identifizieren einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung. Insbesondere greift das Vergleichsmodul 106 (unmittelbar) bei Erhalt einer erfassten elektronischen Mediumkennung auf den Datenspeicher 110 zu und vergleicht diese elektronische Mediumkennung mit den gespeicherten gesperrten elektronischen Mediumkennungen, um festzustellen, ob die erfasste elektronische Mediumkennung mit einer gesperrten elektronischen Mediumkennung identisch ist oder nicht.

Das anmeldungsgemäße Prüfmodul 108 kommt insbesondere nur dann zum Einsatz, wenn das Vergleichsmodul 106 eine gesperrte elektronische Mediumkennung identifiziert hat, die erfasste elektronische Mediumkennung also in dem Sperrdatensatz enthalten ist. Das Prüfmodul 108 ist eingerichtet, bei einer Identifizierung einer gesperrten elektronischen Mediumkennung, zum Prüfen, ob das mindestens eine der identifizierten gesperrten elektronischen Mediumkennung zugeordnete Sperrattribut mindestens ein vorgegebenes Sperrkriterium erfüllt.

Das mindestens eine Sperrkriterium kann beispielsweise vorgeben, dass die Angabe, ob mindestens eine weitere Transportfahrt mit dem zugehörigen Open Payment Ticketmedium erlaubt ist oder nicht, bejaht sein muss, die Anzahl an durchgeführten Transportfahrten seit Aufnahme in den Sperrdatensatz kleiner als 7 sein muss und die Zeitdauer seit Aufnahme in den Sperrdatensatz kleiner als 1 Monat sein muss. Ferner kann beispielsweise ein (nicht gezeigtes) Zeitmodul des Prüfmoduls 108 als Erfassungszeitpunkt der elektronischen Mediumkennung durch das Lesemodul den 01.08.2022, 14:51 feststellen. Bei dem Beispiel nach Tabelle 2 erfüllen nur die Sperrattribute (bzw. deren Attributwerte) von der ersten elektronischen Mediumkennung (123456789123) die genannten Kriterien. Wie beschrieben wurde, können weniger oder mehr oder andere Sperrattribute und/oder Sperrkriterien durch das Prüfmodul überprüft werden. Wie beschrieben, können andere und/oder weiteren Kriterien (mit z.B. anderen Attributwerten) vorgesehen sein.

Darüber hinaus umfasst die Entwertervorrichtung 100 mindestens ein Ausgabemodul 112. Dem Ausgabemodul 112 kann insbesondere das Ergebnis der Überprüfung einer erfassten elektronischen Mediumkennung von der Prüfanordnung 104 bereitgestellt werden. Das Ausgabemodul 112 kann eingerichtet sein zum Verweigern eines Nutzens des Personentransportsystems, wenn das Prüfmodul 108 feststellt, dass das mindestens eine Sperrattribut (vorzugsweise sämtliche Sperrattribute) das mindestens eine vorgegebene Sperrkriterium (vorzugsweise sämtliche Sperrkriterien) nicht erfüllt. Wenn bei dem vorherigen Beispiel die erfasste elektronische Mediumkennung der zweiten elektronischen Mediumkennung (456789123456) des Sperrdatensatzes nach Tabelle 2 entspricht, dann stellt das Prüfmodul fest, dass mindestens ein Sperrattribut von dieser Kennung mindestens ein entsprechendes Sperrkriterium nicht erfüllt.

Das Ausgabemodul 112 ist darüber hinaus eingerichtet zum Zulassen eines Nutzens des Personentransportsystems, wenn das Prüfmodul 108 feststellt, dass das mindestens eine Sperrattribut das mindestens eine vorgegebene Sperrkriterium erfüllt (wie bei dem beschriebenen Beispiel der ersten elektronischen Mediumkennung (123456789123)).

Ferner kann das Ausgabemodul 112 eingerichtet sein zum Zulassen eines Nutzens des Personentransportsystems, wenn das Vergleichsmodul 106 feststellt, dass die erfasste elektronische Mediumkennung nicht in dem Sperrdatensatz enthalten ist.

Die Figur 2 zeigt eine schematische Ansicht eines Ausführungsbeispiels einer Durchgangssperre 228 gemäß der vorliegenden Anmeldung mit einem Ausführungsbeispiel einer Entwertervorrichtung 200 gemäß der vorliegenden Anmeldung. Zur Vermeidung von Wiederholungen werden nachfolgend hinsichtlich der Entwertervorrichtung 200 im Wesentlichen nur die Unterschiede zu dem Ausführungsbeispiel nach Figur 1 beschrieben und ansonsten auf die vorherigen Ausführungen verwiesen.

Die dargestellte Durchgangssperre 228 ist gebildet durch einen Basiskörper 232 und einem beweglich an dem Basiskörper 232 angeordneten Sperrelement 230 (z.B. eine schwenkbare Tür). In dem Basiskörper 232 ist vorliegend mindestens ein ansteuerbarer Aktor 234 integriert. Der Aktor 234 ist eingerichtet zum Bewegen des mindestens einen Sperrelements 230 zwischen einer (gezeigten) Sperrposition bzw. geschlossenen Position und einer Freigabeposition bzw. geöffneten Position.

Im Ausgangszustand kann die dargestellte Durchgangssperre 228 gesperrt sein. Das bedeutet insbesondere, dass das Sperrelement 230 in der Sperrposition einen Nutzer am Durchgehen durch die Durchgangssperre 228 physisch hindert. In der Freigabeposition kann das Sperrelement derart verfahren sein, dass ein Nutzer am Durchgehen durch die Durchgangssperre 228 physisch nicht gehindert wird.

Darüber hinaus ist vorliegend in dem Basiskörper eine Entwertervorrichtung 200 integriert. Die dargestellte Entwertervorrichtung 200 weist beispielhaft mindestens eine optische Anzeige 222 (beispielsweise ein Leuchtmittel, das in unterschiedlichen Farben leuchten kann), eine akustische Schnittstelle 224 (z.B. ein Lautsprecher) und ein Funkmodul 226 (z.B. ein Bluetooth-Modul) auf.

Das Ausgabemodul 212 kann vorliegend eingerichtet sein zum Ansteuern des Aktors 234. Das Ausgabemodul 212 kann beispielsweise in einer Steuerung der Durchgangssperre 228 integriert sein und/oder diese bilden.

Wenn das Vergleichsmodul 206 feststellt, dass die die erfasste elektronische Mediumkennung nicht in dem Sperrdatensatz enthalten ist (und dass die erfasste elektronische Mediumkennung von einem Herausgeber stammt, der im Personentransportsystem zugelassen ist), kann das Ausgabemodul 212 ein Nutzen des Personentransportsystems zulassen, indem zumindest der Aktor 234 derart angesteuert wird, dass das Sperrelement 230 mit einer ersten Geschwindigkeit in die Freigabeposition bewegt wird.

Wenn das Prüfmodul 208 feststellt, dass das mindestens eine Sperrattribut das mindestens eine vorgegebene Sperrkriterium erfüllt (wie bei dem beschriebenen Beispiel der ersten elektronischen Mediumkennung (123456789123)), kann das Ausgabemodul 212 ein Nutzen des Personentransportsystems zulassen, indem zumindest der Aktor 234 derart angesteuert wird, dass das Sperrelement 230 in die Freigabeposition bewegt wird.

Optional kann dabei das Ausgabemodul 212 den Aktor 234 derart ansteuern, dass das Sperrelement 230 mit einer zweiten Geschwindigkeit in die Freigabeposition bewegt wird, wobei die zweite Geschwindigkeit bevorzugt kleiner sein kann als die erste Geschwindigkeit. Mit anderen Worten: Es kann vorgesehen sein, dass sich eine Durchgangssperre erkennbar langsamer öffnet, wenn ein Ticketmedium verwendet wird, das auf einer Sperrliste eingetragen ist und das nur deshalb (noch) zugelassen ist, weil es ein Sperrkriterium erfüllt.

Optional kann durch das Ausgabemodul 212 die optische Anzeige 222 und/oder die akustische Schnittstelle 224 und/oder das Funkmodul 226 angesteuert werden. Beispielsweise kann eine Ansteuerung bewirken, dass eine Zulassungsinformation bzw. eine Sperr-Zulassungsinformation durch die mindestens eine optische Anzeige angezeigt wird und/oder durch die akustische Schnittstelle ausgeben wird und/oder durch das Funkmodul versendet wird. Insbesondere kann der Nutzer durch ein langsames Öffnen (im Vergleich zu einem Normalmodus) des Sperrelements 230 (kurzfristig) zurückgehalten und veranlasst werden, die optische Anzeige 222 wahrzunehmen und deren angezeigte Information zu lesen. Wenn das Open Payment Ticketmedium beispielsweise ein Smartphone oder dergleichen ist, kann eine ausgesendete Zulassungsinformation bzw. eine Sperr-Zulassungsinformation von diesem Endgerät empfangen werden. Darin enthaltene Instruktionen können durch das Endgerät ausgeführt werden, derart dass eine entsprechende Information durch eine optische Anzeige des Endgeräts angezeigt wird und/oder durch eine haptische Schnittstelle des Endgeräts angezeigt wird und/oder durch eine akustische Schnittstelle des Endgeräts ausgegeben wird.

Alternativ oder zusätzlich kann das Ausgabemodul 212 eingerichtet sein zum Bewirken eines Aussendens einer Sperr-Zulassungsnachricht an ein der gesperrten elektronischen Mediumkennung zugeordnetes Nutzerkonto.

Wenn das Prüfmodul 208 feststellt, dass das mindestens eine Sperrattribut das mindestens eine vorgegebene Sperrkriterium nicht erfüllt, kann das Ausgabemodul 212 eingerichtet sein zum Verweigern eines Nutzens des Personentransportsystems durch Ansteuern eines Aktors 234, derart, dass das Sperrelement 230 in der Sperrposition bleibt (bei anderen Varianten kann ein Bewegen in die Sperrposition bewirkt werden). Ein Zugang zu dem Transportfahrzeug wird physisch verhindert.

Optional kann das Ausgabemodul 212 eingerichtet sein zum Verweigern eines Nutzens des Personentransportsystems durch Ansteuern mindestens einer optischen Anzeige 222, derart, dass eine Verweigerungsinformation durch die mindestens eine optische Anzeige 222 angezeigt wird und/oder durch Ansteuern mindestens einer akustischen Schnittstelle 224, derart, dass eine Verweigerungsinformation durch die mindestens eine akustische Schnittstelle 224 ausgegeben wird und/oder durch Ansteuern des Funkmoduls, derart, dass ein Aussenden eines Funksignals (insbesondere ein Bluetooth-Signals) bewirkt wird, enthaltend eine durch das Open-Payment Ticketmedium oder ein Endgerät auslesbare Verweigerungsinformation.

Alternativ oder zusätzlich kann das Ausgabemodul 212 eingerichtet sein zum Verweigern eines Nutzens des Personentransportsystems durch Ansteuern des Kommunikationsmoduls 214 zum Bewirken eines Aussendens einer Verweigerungsnachricht an ein der gesperrten elektronischen Mediumkennung zugeordnetes Nutzerkonto.

Es versteht sich, dass bei Varianten der Anmeldung bei einer Entwertervorrichtung auch kein ansteuerbarer Aktor vorgesehen sein kann und beispielsweise nur mindestens eine optische Anzeige und/oder mindestens eine akustische Schnittstelle und/oder mindestens ein Funkmodul durch das Ausgabemodul ansteuerbar sind.

Die Figur 3 zeigt ein Ausführungsbeispiel eines Personentransportsystems 340 gemäß der vorliegenden Anmeldung. Das Personentransportsystem 340 umfasst eine Mehrzahl von Entwertervorrichtungen 300. Beispielhaft sind in dem dargestellten Ausführungsbeispiel drei Entwertervorrichtungen 300 dargestellt. Lediglich zu Gunsten einer besseren Übersicht wurde auf die Darstellung von Details der dargestellten Entwertervorrichtungen 300 verzichtet. Eine Entwertervorrichtung 300 kann beispielsweise gemäß einer Entwertervorrichtung nach Figur 1 und/oder Figur 2 gebildet sein, so dass hinsichtlich der Details einer Entwertervorrichtung insbesondere auf diese Ausführungsbeispiele verwiesen wird.

Eine Entwertervorrichtung 300 kann in einem Transportfahrzeug 360 (vorliegend beispielhaft ein Bus) angeordnet sein, insbesondere in einem Eingangsbereich 362 und/oder einem Ausgangsbereich 362 des Transportfahrzeugs 360. Eine Anordnung in dem Eingangsbereich 362 und/oder Ausgangsbereich 362 des Transportfahrzeugs 360 ermöglicht es einem Nutzer des Personentransportsystems 340 beim Betreten bzw. Verlassen (in einfacher Weise) sein/ihr Open Payment Ticketmedium 316 in die Reichweite des Lesemoduls der Entwertervorrichtung 300 zu halten, um ein Erfassen der elektronischen Mediumkennung des Open Payment Ticketmediums 316 zu bewirken.

Wie beschrieben wurde, kann beispielsweise durch mindestens eine optische Anzeige und/oder mindestens eine akustische Schnittstelle nach einem Erfassen einer elektronischen Mediumkennung anzeigen, ob ein Nutzen des Personentransportsystems 340 bzw. des Transportfahrzeugs 360 zugelassen oder verweigert wird.

Das Personentransportsystem 340 kann vorzugsweise das mindestens eine Transportfahrzeug 360 umfassen.

Alternativ oder zusätzlich kann eine Entwertervorrichtung 300 in einem Haltestellenbereich 364 des Personentransportsystems 340 angeordnet sein. Beispielsweise kann eine Durchgangssperrreihe 366 (auch als Gate Array bezeichnet) mit einer Mehrzahl von Durchgangssperren 328 vorgesehen sein. Lediglich zu Gunsten einer besseren Übersicht wurde auf die Darstellung von Details einer Durchgangssperre 328 verzichtet. Beispielsweise kann eine Durchgangssperre 328 entsprechend der Durchgangssperre nach Figur 2 gebildet sein, so dass insbesondere hinsichtlich der Details auf die Figur 2 verwiesen wird.

Das Personentransportsystem 340 kann die mindestens eine Durchgangssperre 328, insbesondere die mindestens eine Durchgangssperrreihe 366 umfassen.

Darüber hinaus kann das Personentransportsystem 340 mindestens ein Open Payment Ticketmedium 316 umfassen, vorzugsweise eine Vielzahl von Open Payment Ticketmedien 316.

Außerdem umfasst das Personentransportsystem 340 mindestens ein Hintergrundsystem 342. Das dargestellte Hintergrundsystem 342 (insbesondere gebildet durch mindestens eine Rechenvorrichtung und/oder ein Cloud-System) umfasst mindestens ein Kommunikationsmodul 344. Das Kommunikationsmodul 344 des Hintergrundsystems 342 ist zumindest eingerichtet zum Austauschen von Daten mit den Entwertervorrichtungen 300 über mindestens ein (drahtloses und/oder drahtgebundenes) Kommunikationsnetz 358. Das mindestens eine Kommunikationsmodul 344 ist eingerichtet zum Senden bzw. Verteilen eines Sperrdatensatzes an die Mehrzahl von Entwertervorrichtungen 300.

Ferner kann das Kommunikationsmodul 344 eingerichtet sein zum Empfangen von Entwertungsdatensätzen. Wie beschrieben, ist eine Entwertervorrichtung 300 eingerichtet zum Erfassen elektronischer Mediumkennungen. Insbesondere kann eine Entwertervorrichtung 300 mindestens ein (nicht gezeigtes) Erzeugungsmodul umfassen, das eingerichtet sein kann zum Erzeugen eines Entwertungsdatensatzes. Insbesondere kann für jede erfasste elektronische Mediumkennung ein jeweiliger Entwertungsdatensatz erzeugt werden.

Ein Entwertungsdatensatz enthält zumindest die elektronische Mediumkennung und vorzugsweise den Erfassungszeitpunkt (insbesondere ein Zeitstempel) der Erfassung der elektronischen Mediumkennung durch das Lesemodul und eine Kennung der Entwertervorrichtung 300. Durch die Kennung der Entwertervorrichtung 300 kann insbesondere der Standort der Entwertervorrichtung 300 bestimmbar sein (beispielsweise unter Nutzung einer (nicht gezeigten) Standortdatenbank, in der jeder Kennung eine Standortangabe zugeordnet ist). Hierdurch kann insbesondere der Fahrtstartpunkt oder Fahrtendpunkt (oder ein Zwischenhalt) des Nutzers 368 bestimmt werden.

Ferner kann der Entwertungsdatensatz alternativ oder zusätzlich eine Position bzw. ein Positionsdatum der Entwertervorrichtung 300 während des Erfassungszeitpunkts der elektronischen Mediumkennung enthalten. Dies ist insbesondere dann der Fall, wenn sich die Entwertervorrichtung 300 in einem Transportfahrzeug 360 befindet. Das Positionsdatum (z.B. GPS-Koordinaten oder Haltestelle oder dergleichen) kann zumindest ein Bestimmen der Position der Entwertervorrichtung 300 zum Zeitpunkt des Erfassens der elektronischen Mediumkennung durch die Entwertervorrichtung 300 ermöglichen. Hierdurch kann der Fahrtstartpunkt oder Fahrtendpunkt (oder ein Zwischenhalt) einer Entwertervorrichtung 300 bestimmt werden, die sich innerhalb eines Transportfahrzeugs 360 befindet.

Optional kann ein Entwertungsdatensatz ein Datum enthalten, das angibt, ob ein Nutzen des Personentransportsystems 340 für die entsprechende elektronische Mediumkennung zugelassen oder verweigert wurde. Auch kann ein Entwertungsdatensatz mindestens eine weitere Kennung enthalten, wie eine Fahrzeugkennung.

Ein erzeugter Entwertungsdatensatz kann durch das Kommunikationsmodul der Entwertervorrichtung 300 an das Hintergrundsystem 342 übertragen werden, beispielsweise unmittelbar nach der Erzeugung des Entwertungsdatensatzes. Auch kann vorgesehen sein, dass erzeugte Entwertungsdatensätze zunächst lokal gespeichert werden und gespeicherte Entwertungsdatensätze als Bündel von Zeit zu Zeit (beispielsweise regelmäßig oder wenn eine Kommunikationsverbindung zu dem Hintergrundsystem herstellbar ist oder wenn eine bestimmte Anzahl an Entwertungsdatensätze erzeugt wurde oder dergleichen) übertragen werden.

Das Hintergrundsystem 342 kann vorzugsweise ein Fahrtrekonstruktionsmodul 346 umfassen, eingerichtet zum Rekonstruieren einer durchgeführten Transportfahrt, zumindest basierend auf einem empfangenen (zuvor beschrieben) Entwertungsdatensatz in Form eines Check-In Datensatzes und optional einem bereitgestellten Check-Out Datensatz, enthaltend zumindest dieselbe elektronische Mediumkennung. Weitere Daten, wie Fahrplandaten, Bewegungsdaten der Transportfahrzeuge 360 etc. können durch das Fahrtrekonstruktionsmodul 346 bei der Rekonstruktion der durchgeführten Transportfahrt berücksichtigt werden.

Basierend auf einer rekonstruierten Transportfahrt kann ein Generierungsmodul 348 des Hintergrundsystems 342 eingerichtet sein zum Generieren eines Abrechnungsdatensatzes (in herkömmlicher Weise). Das Kommunikationsmodul 344 (das aus mehreren unterschiedlichen Kommunikationsmitteln, die auf unterschiedlichen Technologien basierend, gebildet sein kann) des Hintergrundsystems 342 kann eingerichtet sein zum Senden einer Zahlungsanfrage, enthaltend den Abrechnungsdatensatz, an eine (nicht gezeigte) Rechenvorrichtung eines Zahlungsdienstleisters (z.B. eine Bank oder dergleichen).

Das Kommunikationsmodul 344 kann zudem eingerichtet sein zum Empfangen einer Zahlungsantwort auf eine ausgesendete Zahlungsanfrage. Eine Zahlungsanfrage und/oder eine Zahlungsantwort enthält/enthalten bevorzugt die elektronische Mediumkennung (beispielsweise in Form eines Hashwertes).

Ferner kann eine Zahlungsantwort eine Zahlungsablehnungsinformation und mindestens einen Zahlungsablehnungsgrund enthalten. Es versteht sich, dass weitere Daten enthalten sein können.

Darüber hinaus umfasst das Hintergrundsystem 342 vorzugsweise ein Erstellungsmodul 350. Das dargestellte Erstellungsmodul 350 ist eingerichtet zum Erstellen eines Sperrdatensatzes. Insbesondere kann das Erstellungsmodul 350 eingerichtet sein zum Erstellen eines Sperrdatensatzes, basierend auf der Zahlungsablehnungsinformation, dem mindestens einen Zahlungsablehnungsgrund und mindestens einem vorgegebenen Sperrgenerierungskriterium. Das Sperrgenerierungskriterium kann in einem Datenspeicher 352 des Hintergrundsystems 342 gespeichert sein und insbesondere vorgeben, nach welchen Regeln ein Sperrattribut (bzw. dessen Wert) erstellt wird.

Das Erstellungsmodul 350 kann beispielsweise eine Zuordnungstabelle entsprechend der Tabelle 1 und/oder 2 erstellen und insbesondere aktualisieren, beispielsweise bei Detektion einer Änderung. Beispielsweise kann das Erstellungsmodul 350 über mindestens einen (nicht gezeigten) Zähler verfügen, der eingerichtet ist zum Zählen der seit Aufnahme der elektronischen Mediumkennung in den Sperrdatensatz mit dieser elektronischen Mediumkennung durchgeführten Transportfahrten, basierend auf den empfangenen Entwertungsdatensätzen und/oder den rekonstruierten Transportfahrten mit derselben elektronischen Mediumkennung.

Vorzugsweise zusätzlich kann das Erstellungsmodul 350 ein (nicht gezeigtes) Zeitmodul umfassen. Das Zeitmodul kann eingerichtet sein zum Bestimmen des Aufnahmezeitpunkts einer elektronischen Mediumkennung in den Sperrdatensatz. Ferner kann das Zeitmodul ein Masterzeitmodul sein (bei Varianten kann auch ein zusätzliches Masterzeitmodul vorgesehen sein), eingerichtet zum Synchronisieren der Zeitmodule der Entwertervorrichtungen 300.

Darüber hinaus kann das Hintergrundsystem 342 mindestens ein Bestimmungsmodul 354 umfassen, eingerichtet zum Bestimmen des geographischen Fahrtdatensatzes, der die Stammstrecke des Nutzer des Open Payment Ticketmediums 316 des Nutzers der entsprechenden elektronischen Mediumkennung repräsentiert bzw. definiert, basierend auf einer Vielzahl von empfangenen Entwertungsdatensätzen, jeweils enthaltend zumindest dieselbe elektronische Mediumkennung und eine Kennung der Entwertervorrichtung 300 und/oder der Position der Entwertervorrichtung 300 während des Erfassungszeitpunkts der elektronischen Mediumkennung.

Das Bestimmungsmodul 354 kann die beispielsweise in dem Datenspeicher 352 gespeicherten (historischen) Entwertungsdatensätze oder die hierauf basierenden rekonstruierten Transportfahrten auswerten. Wenn das Bestimmungsmodul 354 bei der Auswertung feststellt, dass für dieselbe elektronische Mediumkennung dieselbe Strecke bzw. Transportfahrt (vorzugsweise definiert durch Fahrtstartpunkt (z.B. eine bestimmte Entwertervorrichtungskennung und/oder bestimmter Koordinatensatz) und Fahrtendpunkt (z.B. eine bestimmte Entwertervorrichtungskennung und/oder bestimmter Koordinatensatz)) mit einer bestimmten minimalen Häufigkeit pro Zeiteinheit (z.B. zwischen 2- und 5-mal pro Woche und/oder zwischen 5- und 20-mal pro Monat und/oder dergleichen) zurückgelegt wurde, kann ein entsprechender geographischen Fahrtdatensatz bestimmt und insbesondere gespeichert werden, beispielsweise in einer Stammstreckendatenbank 356.

Das Erstellungsmodul 350 kann auf diese Stammstreckendatenbank 356 zugreifen. Insbesondere dann, wenn eine elektronische Mediumkennung in den Sperrdatensatz aufgenommen werden soll, kann das Erstellungsmodul 350 die Stammstreckendatenbank 356 nach der aufzunehmenden elektronischen Mediumkennung durchsuchen. Wenn festgestellt wird, dass ein geographischer Fahrtdatensatz für diese Mediumkennung vorliegt, kann dieser Mediumkennung ein Sperrattribut mit dem bestimmten Fahrtdatensatz als Sperrattributwert zugeordnet werden. Wie beschrieben wurde, kann alternativ oder zusätzlich auch eine Entwertervorrichtung über ein Bestimmungsmodul verfügen.

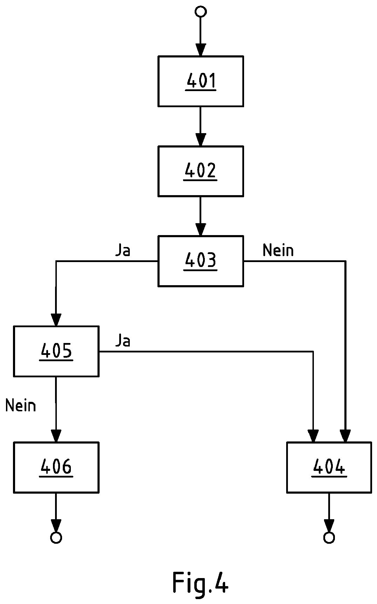

Die Figur 4 zeigt ein Diagramm eines Ausführungsbeispiels eines Verfahrens gemäß der vorliegenden Anmeldung. Insbesondere kann das Verfahren durch eine Entwertervorrichtung nach Figur 1 und/oder Figur 2 ausgeführt werden, beispielsweise in einem Personentransportsystem nach Figur 3.

In Schritt 401 kann ein Empfangen, durch ein Kommunikationsmodul einer Entwertervorrichtung, eines (aktualisierten) Sperrdatensatzes erfolgen. Der empfangene (aktualisierte) Sperrdatensatz kann durch ein Speichermodul in dem Datenspeicher der Entwertervorrichtung gespeichert werden. Wie beschrieben wurde, enthält der Sperrdatensatz mindestens eine gesperrte elektronische Mediumkennung und mindestens ein der gesperrten elektronischen Mediumkennung zugeordnetes Sperrattribut.

In Schritt 402 erfolgt ein Erfassen, durch ein Lesemodul der Entwertervorrichtung, einer elektronischen Mediumkennung eines Open Payment Ticketmediums, wie beschrieben wurde.

In Schritt 403 erfolgt ein Identifizieren, durch ein Vergleichsmodul der Entwertervorrichtung, einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung, wie beschrieben wurde.

Wenn keine gesperrte elektronische Mediumkennung identifiziert werden kann, also die erfasste elektronische Mediumkennung nicht in dem Sperrdatensatz enthalten ist, kann, durch das Ausgabemodul, ein Nutzen des Personentransportsystem in Schritt 404 zugelassen bzw. freigegeben werden, wie beschrieben wurde.

Wenn bzw. bei einer Identifizierung einer gesperrten elektronischen Mediumkennung, also wenn die erfasste elektronische Mediumkennung in dem Sperrdatensatz enthalten ist, erfolgt in Schritt 405 ein Prüfen, durch ein Prüfmodul der Entwertervorrichtung, ob das mindestens eine der identifizierten gesperrten elektronischen Mediumkennung zugeordnete Sperrattribut mindestens ein vorgegebenes Sperrkriterium erfüllt, wie beschrieben wurde.

Wenn festgestellt werden kann, dass das mindestens eine der identifizierten gesperrten elektronischen Mediumkennung zugeordnete Sperrattribut das mindestens eine vorgegebene Sperrkriterium erfüllt, erfolgt, durch das Ausgabemodul, ein Zulassen des Nutzens des Personentransportsystem in Schritt 404, wie beschrieben wurde.

Ferner kann in Schritt 406 ein Verweigern, durch das Ausgabemodul der Entwertervorrichtung, eines Nutzens des Personentransportsystems erfolgen, wenn das Prüfmodul feststellt, dass das mindestens eine Sperrattribut das mindestens eine vorgegebene Sperrkriterium nicht erfüllt, wie beschrieben wurde.

### Bezugszeichenliste

- 100: Entwertervorrichtung
- 102: Lesemodul
- 104: Prüfanordnung
- 106: Vergleichsmodul
- 108: Prüfmodul
- 110: Datenspeicher
- 112: Ausgabemodul
- 114: Kommunikationsmodul der Entwertervorrichtung
- 116: Open Payment Ticketmedium
- 118: Speichermittel
- 120: Speichermodul
- 200: Entwertervorrichtung
- 202: Lesemodul
- 204: Prüfanordnung
- 206: Vergleichsmodul
- 208: Prüfmodul
- 212: Ausgabemodul
- 214: Kommunikationsmodul der Entwertervorrichtung
- 222: optische Anzeige
- 224: akustische Schnittstelle
- 226: Funkmodul
- 228: Durchgangssperre
- 230: Sperrelement
- 232: Basiskörper
- 234: Aktor
- 300: Entwertervorrichtung
- 316: Open Payment Ticketmedium
- 328: Durchgangssperre
- 340: Personentransportsystem
- 342: Hintergrundsystem
- 344: Kommunikationsmodul des Hintergrundsystems
- 346: Fahrtrekonstruktionsmodul
- 348: Generierungsmodul
- 350: Erstellungsmodul
- 352: Datenspeicher
- 354: Bestimmungsmodul
- 356: Stammstreckendatenbank
- 358: Kommunikationsnetz
- 360: Transportfahrzeug
- 362: Ausgangsbereich bzw. Eingangsbereich
- 364: Haltestellenbereich
- 366: Durchgangssperrreihe
- 368: Nutzer

## Patentansprüche

1. Entwertervorrichtung (100, 200, 300) für ein Personentransportsystem (340), umfassend:
- mindestens ein Lesemodul (102, 202), eingerichtet zum Erfassen einer elektronischen Mediumkennung eines Open Payment Ticketmediums (116, 316),
- mindestens einen Datenspeicher (110, 210), eingerichtet zum Speichern eines Sperrdatensatzes,
- wobei der Sperrdatensatz mindestens eine gesperrte elektronische Mediumkennung und mindestens ein der gesperrten elektronischen Mediumkennung zugeordnetes Sperrattribut enthält,
- mindestens eine Prüfanordnung (104, 204) mit mindestens einem Vergleichsmodul (106, 206) und mindestens einem Prüfmodul (108, 208),
- wobei das Vergleichsmodul (106, 206) eingerichtet ist zum Identifizieren einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung,
- wobei das Prüfmodul (108, 208) eingerichtet ist, bei einer Identifizierung einer gesperrten elektronischen Mediumkennung, zum Prüfen, ob das mindestens eine der identifizierten gesperrten elektronischen Mediumkennung zugeordnete Sperrattribut mindestens ein vorgegebenes Sperrkriterium erfüllt, und
- mindestens ein Ausgabemodul (112, 212), eingerichtet zum Zulassen eines Nutzens des Personentransportsystems (340), wenn das Prüfmodul (108, 208) feststellt, dass das mindestens eine Sperrattribut das mindestens eine vorgegebene Sperrkriterium erfüllt.

2. Entwertervorrichtung (100, 200, 300) nach Anspruch 1, **dadurch gekennzeichnet, dass** die Entwertervorrichtung (100, 200, 300) ferner umfasst:
- mindestens ein Kommunikationsmodul (114, 214), eingerichtet zum Empfangen eines aktualisierten Sperrdatensatzes, und
- mindestens ein Speichermodul (120), eingerichtet zum Speichern des aktualisierten Sperrdatensatzes in dem Datenspeicher (110, 210).

3. Entwertervorrichtung (100, 200, 300) nach Anspruch 1 oder 2, **dadurch gekennzeichnet, dass** die Entwertervorrichtung (100, 200, 300) ferner umfasst:
- mindestens ein Kommunikationsmodul (114, 214), eingerichtet zum Versenden mindestens eines Entwertungsdatensatzes an ein Hintergrundsystem (342) des Personentransportsystems (340),
- wobei der Entwertungsdatensatz zumindest die erfasste elektronische Mediumkennung und vorzugsweise mindestens ein Entwertungsdatum enthält, ausgewählt aus der Gruppe, umfassend:
- Erfassungszeitpunkt der elektronischen Mediumkennung,
- Kennung der Entwertervorrichtung,
- Position der Entwertervorrichtung (100, 200, 300) während des Erfassungszeitpunkts der elektronischen Mediumkennung.

4. Entwertervorrichtung (100, 200, 300) nach einem der vorherigen Ansprüche, **dadurch gekennzeichnet, dass**
- das mindestens eine Sperrattribut eine Angabe ist, ob mindestens eine weitere Transportfahrt mit dem zugehörigen Open Payment Ticketmedium erlaubt ist oder nicht.

5. Entwertervorrichtung (100, 200, 300) nach einem der vorherigen Ansprüche, **dadurch gekennzeichnet, dass**
- das mindestens eine Sperrattribut eine Anzahl der mit dem zugehörigen Open Payment Ticketmedium (116, 316) durchgeführten Transportfahrten seit Aufnahme der elektrischen Mediumkennung des Open Payment Ticketmedium (116, 316) in den Sperrdatensatz ist, und
- das mindestens eine Sperrkriterium eine maximal zulässige Anzahl an durchführbare Transportfahrten ist,
- wobei das Ausgabemodul (112, 212) eingerichtet ist zum Zulassen eines Nutzens des Personentransportsystems (340), wenn das Prüfmodul (108, 208) feststellt, dass die Anzahl der mit dem zugehörigen Open Payment Ticketmedium durchgeführten Transportfahrten gleich oder kleiner ist als die maximal zulässige Anzahl an durchführbaren Transportfahrten.

6. Entwertervorrichtung (100, 200, 300) nach einem der vorherigen Ansprüche, **dadurch gekennzeichnet, dass**
- das mindestens eine Sperrattribut ein Zeitpunkt der Aufnahme der zugehörigen gesperrten elektronischen Mediumkennung in den Sperrdatensatz ist, und
- das mindestens eine Sperrkriterium eine maximal zulässige Zeitdauer ist,
- wobei das Ausgabemodul (112, 212) eingerichtet ist zum Zulassen eines Nutzens des Personentransportsystems (340), wenn das Prüfmodul (108, 208) feststellt, dass eine Zeitdauer seit der Aufnahme der elektronischen Mediumkennung in den Sperrdatensatz gleich oder kleiner ist als die maximal zulässige Zeitdauer.

7. Entwertervorrichtung (100, 200, 300) nach einem der vorherigen Ansprüche, **dadurch gekennzeichnet, dass**
- das mindestens eine Sperrattribut ein geographischer Fahrtdatensatz ist, der eine Stammstrecke des Nutzers des Open Payment Ticketmediums (116, 316) der gesperrten elektronischen Mediumkennung definiert, und
- das mindestens eine Sperrkriterium eine Standortangabe der Entwertervorrichtung (100, 200, 300) ist,
- wobei das Prüfmodul (108, 208) eingerichtet ist zum Feststellen, ob die Standortangabe in dem geographischen Fahrtdatensatz enthalten ist,
- wobei das Ausgabemodul (112, 212) eingerichtet ist zum Zulassen eines Nutzens des Personentransportsystems (340), wenn das Prüfmodul (108, 208) feststellt, dass die Standortangabe in dem geographischen Fahrtdatensatz enthalten ist.

8. Entwertervorrichtung (100, 200, 300) nach einem der vorherigen Ansprüche, **dadurch gekennzeichnet, dass**
- das Ausgabemodul (112, 212) eingerichtet ist zum Verweigern eines Nutzens des Personentransportsystems (340) durch Ansteuern eines Aktors (234) einer Durchgangssperre (228), derart, dass ein Sperrelement (230) der Durchgangssperre (228) in einer Sperrposition bleibt oder in die Sperrposition bewegt wird,
und/oder
- das Ausgabemodul (112, 212) eingerichtet ist zum Verweigern eines Nutzens des Personentransportsystems (340) durch Ansteuern mindestens einer optischen Anzeige (222) der Entwertervorrichtung (100, 200, 300), derart, dass eine Verweigerungsinformation durch die mindestens eine optische Anzeige (222) angezeigt wird,
und/oder
- das Ausgabemodul (112, 212) eingerichtet ist zum Verweigern eines Nutzens des Personentransportsystems (340) durch Ansteuern mindestens einer akustischen Schnittstelle (224) der Entwertervorrichtung (100, 200, 300), derart, dass eine Verweigerungsinformation durch die mindestens eine akustische Schnittstelle (224) ausgegeben wird,
und/oder
- das Ausgabemodul (112, 212) eingerichtet ist zum Verweigern eines Nutzens des Personentransportsystems (340) durch Aussenden eines Funksignals, enthaltend eine durch das Open-Payment Ticketmedium oder ein Endgerät auslesbare Verweigerungsinformation,
und/oder
- das Ausgabemodul (112, 212) eingerichtet ist zum Verweigern eines Nutzens des Personentransportsystems (340) durch Aussenden einer Verweigerungsnachricht an ein der gesperrten elektronischen Mediumkennung zugeordnetes Nutzerkonto.

9. Personentransportsystem (340), umfassend:
- eine Mehrzahl von Entwertervorrichtungen (100, 200, 300) nach einem der vorherigen Ansprüche, und
- mindestens ein Hintergrundsystem (342) mit mindestens einem Kommunikationsmodul (344), eingerichtet zum Senden des Sperrdatensatzes an die Mehrzahl von Entwertervorrichtungen (100, 200, 300).

10. Personentransportsystem (340) nach Anspruch 9, **dadurch gekennzeichnet, dass** das Hintergrundsystem (342) ferner umfasst:
- mindestens ein Fahrtrekonstruktionsmodul (346), eingerichtet zum Rekonstruieren einer durchgeführten Transportfahrt, zumindest basierend auf einem von einer der Entwertervorrichtungen (100, 200, 300) empfangenen Entwertungsdatensatz in Form eines Check-In Datensatzes, enthaltend zumindest die erfasste elektronische Mediumkennung, und
- mindestens ein Generierungsmodul (348), eingerichtet zum Generieren eines Abrechnungsdatensatzes, zumindest basierend auf der rekonstruierten Transportfahrt,
- wobei das Kommunikationsmodul (344) des Hintergrundsystems (342) eingerichtet ist zum Senden einer Zahlungsanfrage, enthaltend den Abrechnungsdatensatz, an eine Rechenvorrichtung eines Zahlungsdienstleisters.

11. Personentransportsystem (340) nach Anspruch 10, **dadurch gekennzeichnet, dass**
- Fahrtrekonstruktionsmodul (346) eingerichtet ist zum Rekonstruieren der durchgeführten Transportfahrtzusätzlich, zusätzlich basierend auf einem bereitgestellten Check-Out Datensatz, enthaltend zumindest dieselbe elektronische Mediumkennung wie der Check-In-Datensatz.

12. Personentransportsystem (340) nach Anspruch 9, 10 oder 11, **dadurch gekennzeichnet, dass**
- das Kommunikationsmodul (344) des Hintergrundsystems (342) eingerichtet ist zum Empfangen einer Zahlungsantwort auf die gesendete Zahlungsanfrage, und
- das Hintergrundsystem (342) mindestens ein Erstellungsmodul (350) umfasst, eingerichtet zum Erstellen eines Sperrdatensatzes, zumindest basierend auf der empfangenen Zahlungsantwort.

13. Personentransportsystem (340) nach Anspruch 12, **dadurch gekennzeichnet, dass**
- die Zahlungsantwort eine Zahlungsablehnungsinformation und mindestens einen Zahlungsablehnungsgrund umfasst, und
- das Erstellungsmodul (350) eingerichtet ist zum Erstellen eines Sperrdatensatzes, basierend auf der Zahlungsablehnungsinformation, dem mindestens einen Zahlungsablehnungsgrund und mindestens einem vorgegebenen Sperrgenerierungskriterium,
und/oder
- das Erstellungsmodul (350) eingerichtet ist zum Erstellen eines Sperrdatensatzes, basierend auf einer mit einer gesperrten elektronischen Mediumkennung durchgeführten Transportfahrt.

14. Personentransportsystem (340) nach einem der vorherigen Ansprüche 9 bis 13, **dadurch gekennzeichnet, dass** das Hintergrundsystem (342) ferner umfasst:
- mindestens ein Bestimmungsmodul (354), eingerichtet zum Bestimmen des geographischen Fahrtdatensatzes, der die Stammstrecke des Nutzer des Open Payment Ticketmediums des Nutzers der entsprechenden elektronischen Mediumkennung repräsentiert, basierend auf einer Vielzahl von empfangenen Entwertungsdatensätzen, jeweils enthaltend zumindest dieselbe elektronische Mediumkennung und eine Kennung der Entwertervorrichtung und/oder der Position der Entwertervorrichtung (100, 200, 300) während des Erfassungszeitpunkts der elektronischen Mediumkennung,
- das Erstellungsmodul (350) eingerichtet ist zum Erstellen eines Sperrdatensatzes, basierend auf dem bestimmten geographischen Fahrtdatensatz.

15. Verfahren, insbesondere ausführbar durch eine Entwertervorrichtung (100, 200, 300) nach einem der vorherigen Ansprüche 1 bis 8, umfassend:
- Erfassen, durch ein Lesemodul (102, 202) einer Entwertervorrichtung (100, 200, 300) eines Personentransportsystems (340), einer elektronischen Mediumkennung eines Open Payment Ticketmediums (116, 316),
- wobei ein Sperrdatensatz in einem Datenspeicher (110, 210) der Entwertervorrichtung (100, 200, 300) gespeichert ist,
- wobei der Sperrdatensatz mindestens eine gesperrte elektronische Mediumkennung und mindestens ein der gesperrten elektronischen Mediumkennung zugeordnetes Sperrattribut enthält,
- Identifizieren, durch ein Vergleichsmodul (106, 206) der Entwertervorrichtung (100, 200, 300), einer gesperrten elektronischen Mediumkennung aus der mindestens einen in dem Sperrdatensatz enthaltenen gesperrten elektronischen Mediumkennung durch Vergleichen der erfassten elektronischen Mediumkennung mit der mindestens einen gesperrten elektronischen Mediumkennung,
- bei einer Identifizierung einer gesperrten elektronischen Mediumkennung, Prüfen, durch ein Prüfmodul (108, 208) der Entwertervorrichtung (100, 200, 300), ob das mindestens eine der identifizierten gesperrten elektronischen Mediumkennung zugeordnete Sperrattribut mindestens ein vorgegebenes Sperrkriterium erfüllt, und
- Zulassen, durch ein Ausgabemodul (112, 212) der Entwertervorrichtung (100, 200, 300), eines Nutzens des Personentransportsystems (340), wenn das Prüfmodul (108, 208) feststellt, dass das mindestens eine Sperrattribut das mindestens eine vorgegebene Sperrkriterium erfüllt.
